(19)

Europäisches
Patentamt
European
Patent Office
Office européen
des brevets

(11) **EP 4 040 382 A1**

(12) **EUROPEAN PATENT APPLICATION**
published in accordance with Art. 153(4) EPC

(43) Date of publication:
**10.08.2022  Bulletin 2022/32**

(21) Application number: **19947661.5**

(22) Date of filing: **03.10.2019**

(51) International Patent Classification (IPC):
***G06T 7/00*** *(2017.01)*

(52) Cooperative Patent Classification (CPC):
**G06T 7/00**

(86) International application number:
**PCT/JP2019/039125**

(87) International publication number:
**WO 2021/064942 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **SUZUKI, Tatsuya
  Kawasaki-shi, Kanagawa 211-8588 (JP)**
• **IKEDA, Hiroshi
  Kawasaki-shi, Kanagawa 211-8588 (JP)**
• **MURAKAMI, Ryo
  Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **EVALUATION METHOD, EVALUATION PROGRAM, AND INFORMATION PROCESSING SYSTEM**

(57)    An information processing device obtains point group data of a photographic subject and obtains a three-dimensional model corresponding to the photographic subject. The information processing device performs first-type processing, second-type processing, and third-type processing in which the respective initial value sets are different. Based on the likelihood of the result of the first-type processing, the likelihood of the result of the second-type processing, and the likelihood of the result of the third-type processing; the information processing device evaluates the result of the first-type processing, the result of the second-type processing, and the result of the third-type processing. Based on the evaluation results, the information processing device outputs either the result of the first-type processing, or the result of the second-type processing, or the result of the third-type processing as the skeletal frame recognition result of the photographic subject.

FIG.14

**Description**

Technical Field

The present invention is related to an evaluation method.

Background Art

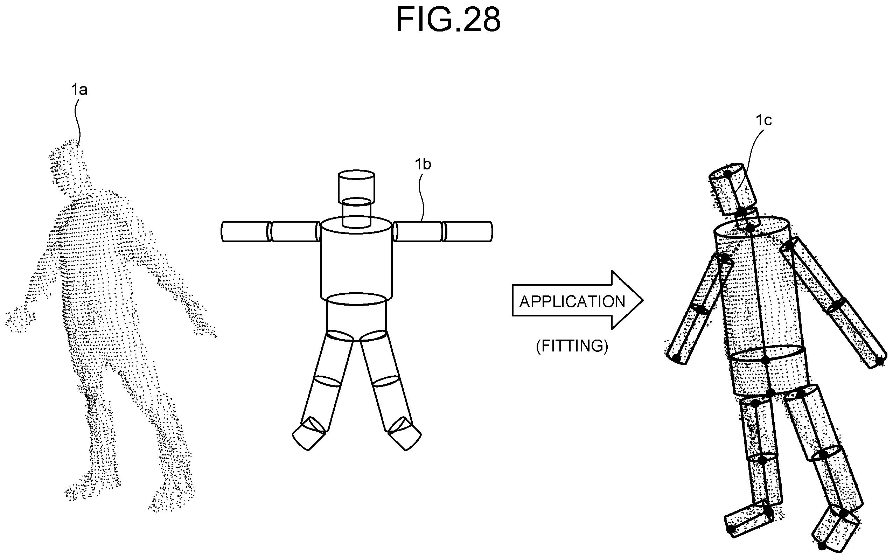

A conventional technology is available in which a range image measurement device such as a laser sensor is used for measuring a three-dimensional point group of the photographic subject, and accordingly the skeletal frame of the photographic subject is recognized. FIG. 28 is a diagram for explaining the conventional technology. As illustrated in FIG. 28, in the conventional technology, a model 1b that is prepared in advance is applied to a three-dimensional point group 1a, and three-dimensional skeletal frame recognition is performed by identifying skeletal frame information 1c of the photographic subject using the state of the applied model 1b as the guide.

In the following explanation, applying the model 1b to the three-dimensional point group 1a is referred to as "fitting". Moreover, a range image measurement device such as a laser sensor is referred to as a "sensor". The three-dimensional point group 1a represents the information obtained by conversion from a range (or equivalently stated as depth) image that is measured by a sensor. In a range image, points and distance values are held in a corresponding manner. In the three-dimensional point group 1a, the points are associated with coordinate information of the Cartesian coordinate system.

The model 1b that is used for the fitting purpose is a cylindrical model in which the body regions of a human body are expressed as cylindrical forms. Regarding the cylindrical forms constituting a cylindrical model, the diameter and the height is decided in advance. In the conventional technology, the joint angles of the model 1b are varied so as to find the joint angles which optimally fit in the three-dimensional point group 1a.

A sensor successively measures range images at a predetermined frame rate. In the conventional technology, fitting is sequentially performed with respect to the three-dimensional point groups that correspond to the range images. At the time of performing the fitting, firstly, an initial value set of the model is set with respect to the three-dimensional point groups. For example, the initial value set of the model includes the position of the model and the joint angles of the model. In the following explanation, the information about the three-dimensional point group with respect to a particular range image, from among a plurality of successive range images, is referred to as a "point-group frame".

As far as identifying the initial value is concerned, in the conventional technology, the result of the fitting performed with respect to the previous point-group frame is used as the initial value set. Alternatively, in the conventional technology, a point-group frame identical to the target point-group frame for fitting (or a range image corresponding to the identical point-group frame) is input to a different skeletal frame recognition unit in which machine learning such as deep learning is implemented; and the initial value set is calculated.

Citation List

Patent Literature

Patent Literature 1: International Publication Pamphlet No. 2018/207292
Patent Literature 2: International Publication Pamphlet No. 2019/030794

Non Patent Literature 1: X. Wei et al., "Accurate Realtime Full-body Motion Capture Using a Single Depth Camera," ACM Transactions on Graphics, Vol.31, No.6, Article 188(2012)

Summary

Technical Problem

The setting of the initial value set has a significant impact on the final-version skeletal frame recognition result. Hence, it is important to enhance the accuracy of the initial value. In the conventional technology, either the result of the fitting performed with respect to the previous point group frame is used as the initial value, or the initial value is calculated by inputting the target point-group frame for fitting to a different skeletal frame recognition unit in which machine learning such as deep learning is implemented. However, in either case, if the movement of the photographic subject changes at a fast rate with reference to the previous point group frame, then the accuracy of the initial value set undergoes a decline.

Meanwhile, while the photographic subject is presenting an act, depending on the posture of the photographic subject at a particular timing, sometimes a portion of the three-dimensional point group of the photographic subject disappears or degrades by noises thereby leading to a temporary decline in the accuracy of skeletal frame recognition. If the result of that skeletal frame recognition is used as the initial value in the fitting of the next point group frame; then, in the next point group frame too, the accuracy of skeletal frame recognition again undergoes a decline. Moreover, even if the information in which a portion of the three-dimensional point group has disappeared is input to a skeletal frame recognition unit that uses machine learning such as deep learning, the accuracy of the skeletal frame information undergoes a decline. Thus, if the result of that skeletal frame information is used as the initial value, it results in a decline in the accuracy of fitting-based skeletal frame recognition.

The present invention has been made in view of the issues explained above, and it is an objective of the present invention to provide an evaluation method, an evaluation program, and an information processing system that enable achieving enhancement in the accuracy of the final output result of fitting-based skeletal frame recognition.

Solution to Problem

According to an aspect of the embodiment of the invention, an evaluation method includes obtaining point group data of a photographic subject based on measurement data of a sensor that detects distance to the photographic subject, using a processor; obtaining a three-dimensional model corresponding to the photographic subject, using the processor; at time of applying the three-dimensional model to the point group data, performing, using the processor first-type processing for applying, to the point group data, the three-dimensional model in which result of previous application operation is set as initial value set, second-type processing for applying, to the point group data, the three-dimensional model in which value measured based on variation due to period of time from previous application operation to current application operation is set as initial value set, and third-type processing for applying, to the point group data, the three-dimensional model in which value calculated based on result of inputting the measurement data to a skeletal frame recognition model is set as initial value set; evaluating result of the first-type processing, result of the second-type processing, and result of the third-type processing based on likelihood of result of the first-type processing, likelihood of result of the second-type processing, and likelihood of result of the third-type processing, using the processor; and outputting, as skeletal frame recognition result of the photographic subject, either result of the first-type processing, or result of the second-type processing, or result of the third-type processing based on evaluation result, using the processor.

Advantageous Effects of Invention

It becomes possible to enhance the accuracy of the final output result of fitting-based skeletal frame recognition.

Brief Description of Drawings

FIG. 1 is a diagram illustrating an example of an information processing system according to a first embodiment.
FIG. 2 is a functional block diagram illustrating a configuration of an information processing device according to the first embodiment.
FIG. 3 is a diagram for explaining a skeletal frame recognition model that is learnt based on machine learning such as deep learning.
FIG. 4 is a diagram illustrating an example of cylindrical model data.
FIG. 5 is a diagram illustrating an exemplary data structure of a priority table.
FIG. 6 is a functional block diagram illustrating a configuration of an evaluation processing unit according to the first embodiment.
FIG. 7 is a diagram for explaining a first-type initial value.
FIG. 8 is a diagram for explaining a second-type initial value.
FIG. 9 is a diagram for explaining a third-type initial value.
FIG. 10 is a diagram illustrating the relationship between an E step and an M step.
FIG. 11 is diagram (1) for explaining Close Point.
FIG. 12 is diagram (2) for explaining the Close Point.
FIG. 13 is a diagram illustrating an example of screen information.
FIG. 14 is a flowchart for explaining a sequence of operations performed in the information processing device according to the first embodiment.
FIG. 15 is a flowchart for explaining the sequence of operations performed in fitting.
FIG. 16 is a flowchart for explaining the sequence of operations performed in an evaluation operation.

FIG. 17 is a diagram for explaining the operations performed in an information processing device according to a second embodiment.

FIG. 18 is a functional block diagram illustrating a configuration of the information processing device according to the second embodiment.

FIG. 19 is a diagram illustrating an exemplary data structure of a scene switching determination table.

FIG. 20 is a diagram illustrating the scene switching conditions regarding an event " vault".

FIG. 21 is a diagram illustrating an exemplary data structure of a scene restriction table.

FIG. 22 is a diagram illustrating an exemplary data structure of a constraint condition table.

FIG. 23 is a functional block diagram illustrating a configuration of an evaluation processing unit according to the second embodiment.

FIG. 24 is a diagram illustrating the relationship between variation and the value of an evaluation function.

FIG. 25 is a flowchart for explaining the sequence of operations performed in the information processing device according to the second embodiment.

FIG. 26 is a flowchart for explaining the sequence of operations performed in a scene determination operation.

FIG. 27 is a diagram illustrating an exemplary hardware configuration of a computer that implements the functions identical to the information processing device.

FIG. 28 is a diagram for explaining the conventional technology.

[Description of Embodiments] (DESCRIPTION OF EMBODIMENTS)

Exemplary embodiments of an evaluation method, an evaluation program, and an information processing system according to the present invention are described below in detail with reference to the accompanying drawings. However, the present invention is not limited by the embodiments described below.

[First embodiment]

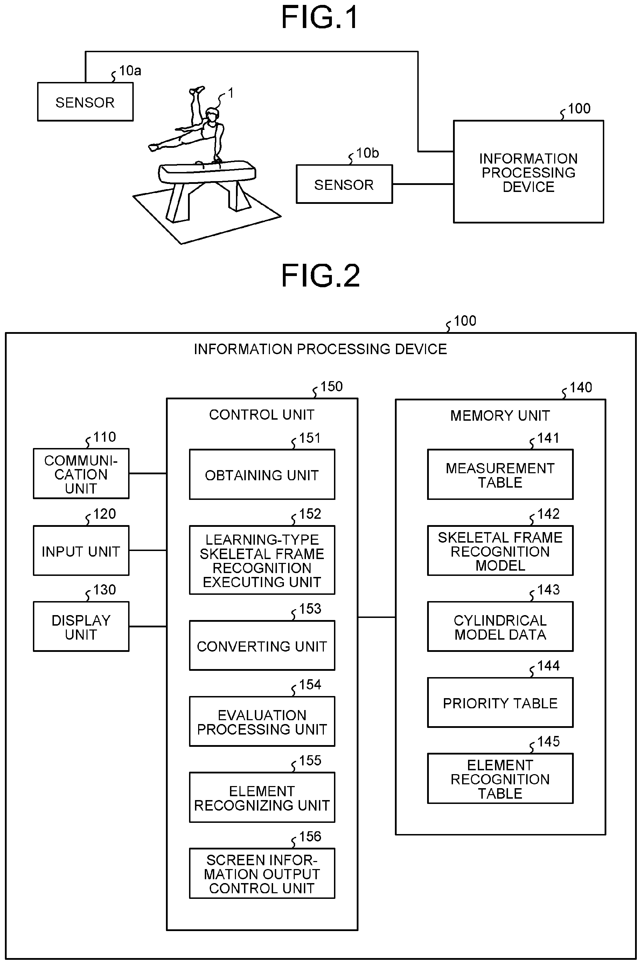

FIG. 1 is a diagram illustrating an example of an information processing system according to a first embodiment. As illustrated in FIG. 1, the information processing system includes sensors 10a and 10b, and includes an information processing device 100. The sensors 10a and 10b and the information processing device 100 are connected to each other in a wired manner or in a wireless manner. In FIG. 1, although the sensors 10a and 10b are illustrated, the information processing system can also include other sensors.

In the first embodiment, as an example, a photographic subject 1 is assumed to present a series of acts on apparatuses. However, that is not the only possible case. Alternatively, for example, the photographic subject 1 can present an act at a place not having any apparatus, or can carry out actions other than presenting an act.

The sensor 10a is a measurement device (a laser sensor) that measures the distance between the outer surface of the photographic subject 1 and the sensor 10a. The sensor 10a outputs range image data, which represents the measurement result, to the information processing device 100. The range image data contains, regarding a point group, information in which the points and the distance values are held in a corresponding manner. Herein, the range image data corresponds to "measurement data".

Regarding the sensor 10b, the explanation is identical to the explanation about the sensor 10a. In the following explanation, the sensors 10a and 10b are sometimes collectively referred to as "sensors 10".

The information processing device 100 obtains the range image data from the sensors 10, and converts it into three-dimensional point group data. The three-dimensional point group data contains, regarding a point group representing the outer surface of the photographic subject, information in which the points and the coordinates of the three-dimensional Cartesian coordinate system are held in a corresponding manner.

With respect to the three-dimensional point group data, the information processing device 100 performs three types of fitting using three initial value sets, and identifies the most probable fitting result as the final-version skeletal frame recognition result. Herein, fitting represents the operation of applying a cylindrical model to the three-dimensional point group data. In the initial value of the fitting as set in a cylindrical model, the position of the cylindrical model and the joint angles among disjunctive cylindrical models are included. Herein, the cylindrical model corresponds to a "three-dimensional model". Regarding specific regions of a human body, the model need not always be cylindrical and can alternatively be elliptical or ellipsoidal.

The three types of fitting include first-type fitting, second-type fitting, and third-type fitting. The first-type fitting corresponds to "first-type processing". The second-type fitting corresponds to "second-type processing". The third-type fitting corresponds to "third-type processing".

In the first-type fitting, the result of the previous instance of fitting is set as the initial value set in the cylindrical model; and the joint angles of the cylindrical model are adjusted, before applying the cylindrical model to the three-dimensional group data. The initial value set used in the first-type fitting is referred to as a "first-type initial value set (Previous)".

In the second-type fitting, the value that is predicted based on the time variation from the previous instance of fitting to the current instance of fitting is set as the initial value set in the cylindrical model; and the joint angles of the cylindrical model are adjusted, before applying the cylindrical model to the three-dimensional group data. The initial value set used in the second-type fitting is referred to as a "second-type initial value set (Predict)".

In the third-type fitting, the value that is calculated based on the result of inputting the range image data to a skeletal frame recognition model using machine learning such as deep learning is set as the initial value set in the cylindrical model; and the joint angles of the cylindrical model are adjusted, before applying the cylindrical model to the three-dimensional group data. The initial value set used in the third-type fitting is referred to as a "third-type initial value set (Skeleton)".

In the information processing device 100, every time range image data is received from the sensors 10, the operation of performing fitting and identifying the final-version skeletal frame recognition result is performed in a repeated manner. Based on the time-series information of the skeletal frame recognition result, the information processing device 100 recognizes the element presented by the photographic subject, and generates and displays screen information indicating the element certification and the scoring result of various contests.

FIG. 2 is a functional block diagram illustrating a configuration of the information processing device according to the first embodiment. As illustrated in FIG. 2, the information processing device 100 includes a communication unit 110, an input unit 120, a display unit 130, a memory unit 140, and a control unit 150.

The communication unit 110 is a processing unit that receives range image data from the sensors 10. Moreover, the communication unit 110 outputs the received range image data to the control unit 150. The communication unit 110 represents an example of a communication device. The communication unit 110 can receive data also from other external devices (not illustrated).

The input unit 120 is an input device that inputs a variety of information to the control unit 150 of the information processing device 100. The input unit 120 corresponds to a keyboard, a mouse, or a touch-sensitive panel. The user operates the input unit 120, and issues a request for displaying screen information and performs screen operations. Moreover, the user can operate the input unit 120 and input the data of the event presented by the photographic subject 1 to the control unit 150.

The display unit 130 is a display device that displays the information output from the control unit 150. For example, the display unit 130 displays screen information indicating the element certification and the scoring result of various contests. The display unit 130 corresponds to a liquid crystal display, an organic EL (Electro-Luminescence) display, or a touch-sensitive panel.

The memory unit 140 includes a measurement table 141, a skeletal frame recognition model 142, cylindrical model data 143, a priority table 144, and an element recognition table 145. The memory unit 140 corresponds to a semiconductor memory device such as a RAM (Random Access Memory) or a flash memory; or a memory device such as an HDD (Hard Disk Drive).

The measurement table 141 is a table for storing the range image data measured by the sensors 10. For example, the measurement table 141 stores the range image data in chronological order. In the measurement table 141, the range image data measured by the sensor 10a is stored separately from the range image data measured by the sensor 10b.

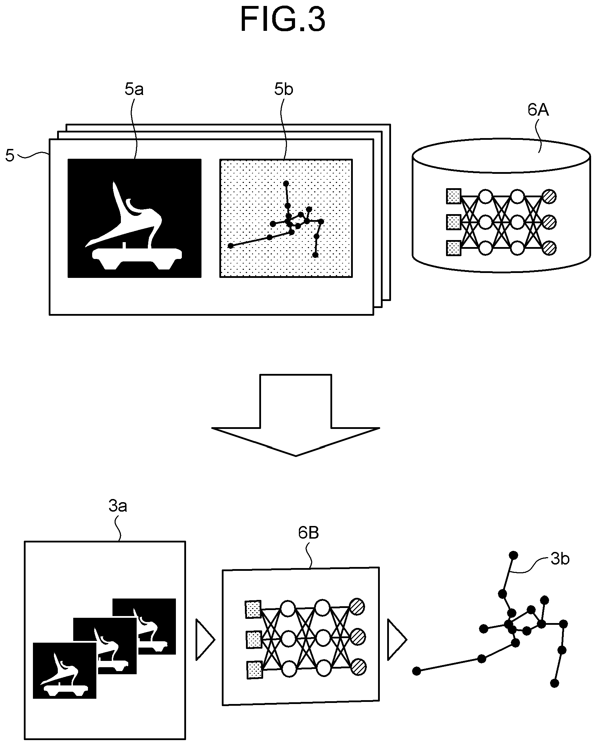

The skeletal frame recognition model 142 represents a set of parameters of a skeletal frame recognition model that is learnt in advance based on the learning data. FIG. 3 is a diagram for explaining the skeletal frame recognition model. For example, a learning device (not illustrated) uses learning data 5 and gets trained in a skeletal frame recognition model 6A. The skeletal frame recognition model 6A is configured using, for example, an CNN (Convolutional Neural Network). The learning data 5 contains a range image 5a and joint coordinates 5b of the human body captured in the image.

The learning device gets trained in the parameters of the skeletal frame recognition model 6A in such a way that, when the range image 5a is input to the skeletal frame recognition model 6A, the output gets close to the joint coordinates 5b. The learnt parameters include the weight and the bias of the CNN. When the parameters learnt as a result of the learning operation are set in the skeletal frame recognition model 6A, a skeletal frame recognition model 6B is obtained. The parameters of the skeletal frame recognition model 6B, which are learnt by the learning device, are stored as the skeletal frame recognition model 142 in the memory unit 140.

The range image 3a measured by the sensor 10 is input to the skeletal frame recognition model 6B. As a result, joint coordinates 3b of the photographic subject 1 are output. The skeletal frame recognition model 6B is executed by a learning-type skeletal frame recognition executing unit 152 (explained later).

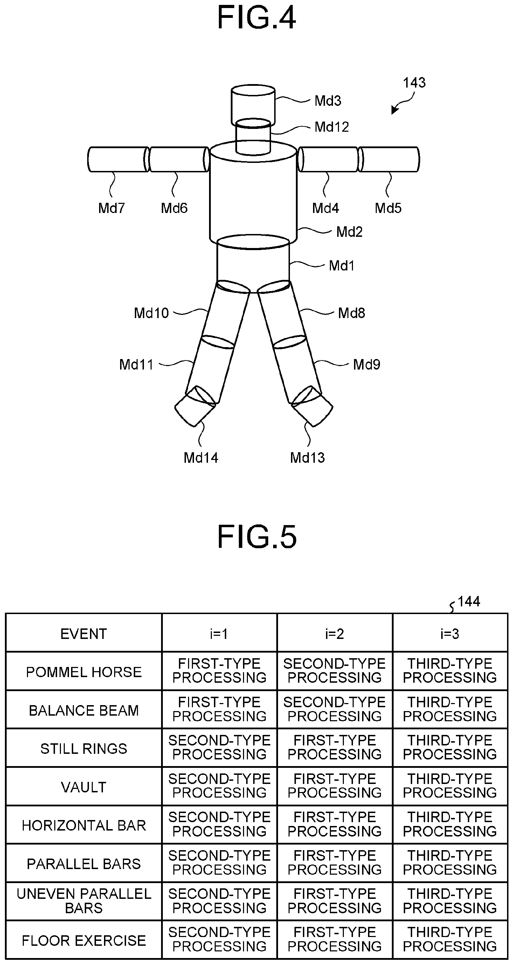

The cylindrical model data 143 represents the data of a model in which the body regions of the human body representing the photographic subject 1 are expressed as cylindrical forms (or elliptical forms). The cylindrical forms are connected by the regions corresponding to the joints of the photographic subject 1. FIG. 4 is a diagram illustrating an example of the cylindrical model data. In the example illustrated in FIG. 4, cylindrical forms Md1 to Md14 are included. Each of the cylindrical forms Md1 to Md14 has cylinder parameters set therein. The cylinder parameters include the height and the diameter of the cylindrical form. Regarding the cylindrical forms Md1 to Md14 constituting the cylindrical model data 143; the height, and the -diameter, are adjusted in advance according to the photographic subject 1. That is, the cylindrical model data that is matched to the body type of the photographic subject 1 is used in the fitting.

The priority table 144 is a table in which, after the fitting is performed using each of the first-type initial value, the second-type initial value, and the third-type initial value, the fitting result that is to be given priority is defined. FIG. 5 is a diagram illustrating an exemplary data structure of the priority table. As illustrated in FIG. 5, in the priority table 144, the fitting result to be given priority is set on an event-by-event basis. Herein, smaller the value of "i", the higher is the priority for the initial value.

For example, for the event "pommel horse", the priority for the initial value set is in order of the result of the first-type processing, the result of the second-type processing, and the result of the third-type processing. Regarding the event in which the movements of the photographic subject 1 are slow, the result of the first-type processing is given priority. On the other hand, regarding the event in which the movements of the photographic subject 1 are fast, the result of the second-type processing is given priority.

The element recognition table 145 is a table in which the time-series variation of each joint position included in each skeletal frame recognition result is held in a corresponding manner to the types of elements. Moreover, in the element recognition table 145, the combinations of the types of elements are held in a corresponding manner to scores. A score is calculated as the total of a D (Difficulty) score and an E (Execution) score. For example, the D score is calculated based on the level of difficulty of the element. The E score is calculated according to the perfection level of the element using the point-deduction scoring system.

The control unit 150 includes an obtaining unit 151, the learning-type skeletal frame recognition executing unit 152, a converting unit 153, an evaluation processing unit 154, an element recognizing unit 155, and a screen information output control unit 156. The control unit 150 is implemented using a CPU (Central Processing Unit), or a GPU (Graphics Processing Unit), or hardwired logic such as an ASIC (Application Specific Integrated Circuit), or an FPGA (Field Programmable Gate Array).

The obtaining unit 151 is a processing unit that obtains the range image data from the sensors 10. Then, the obtaining unit 151 stores, in the measurement table 141, the range image data obtained on a sensor-by-sensor basis. Moreover, the obtaining unit 151 performs a point group integration operation for converting the range images obtained from a plurality of sensors into three-dimensional point group data, and performs a noise removal operation. Herein, it is assumed that each set of range image data has a frame number assigned thereto.

The following explanation is given about the point group integration operation meant for conversion into three-dimensional point group data. The obtaining unit 151 integrates the sets of three-dimensional point group data based on external parameters of the sensor 10a and external parameters of the sensor 10b. In the external parameters, information such as the position and the installation azimuth angle of the corresponding sensor 10 is included. The obtaining unit 151 assigns, to each set of three-dimensional point group data, the same frame number as the frame number assigned to the corresponding pre-conversion range image.

The obtaining unit 151 repeatedly performs the operation of integrating the sets of three-dimensional point group data for successive frame numbers. In the following explanation, the three-dimensional point group data that is obtained as a result of integration performed for a frame number n is referred to as a "point group frame" corresponding to the frame number n.

The following explanation is given about the noise removal operation. The obtaining unit 151 performs the noise removal operation with respect to the point group frame corresponding to each frame number. For example, the obtaining unit 151 performs clustering with respect to the three-dimensional point group included in a point group frame, and classifies the three-dimensional point group into a plurality of clusters. Then, from among the classified clusters, the obtaining unit 151 removes, as noise, the clusters in which the number of points belonging thereto is smaller than a threshold value. In the following explanation, the result obtained by removing the noise from a point group frame is also simply referred to as a point group frame. The obtaining unit 151 repeatedly performs the abovementioned operation with respect to each point group frame.

The obtaining unit 151 sequentially outputs the point group frame corresponding to each frame number to the evaluation processing unit 154.

The learning-type skeletal frame recognition executing unit 152 is a processing unit that executes a skeletal frame recognition model based on the skeletal frame recognition model 142. The skeletal frame recognition model used by the learning-type skeletal frame recognition executing unit 152 corresponds to the skeletal frame recognition model 6B explained with reference to FIG. 3. The learning-type skeletal frame recognition executing unit 152 inputs the range image data, which is stored in the measurement table 141, to the skeletal frame recognition model 6B; and calculates joint coordinate data. The joint coordinate data contains the three-dimensional coordinates of the joint positions of the photographic subject 1. To the joint coordinate data, the learning-type skeletal frame recognition executing unit 152 assigns the frame number of the corresponding range image.

The learning-type skeletal frame recognition executing unit 152 inputs, in order of frame numbers, the sets of range image data to the skeletal frame recognition model 6B; and repeatedly performs the operations explained above. Moreover, the learning-type skeletal frame recognition executing unit 152 outputs the joint coordinate data to the converting unit 153.

Herein, the learning-type skeletal frame recognition executing unit 152 can input, to the skeletal frame recognition model 6B, either the range image data measured by the sensor 10a or the range image data measured by the sensor 10b.

The converting unit 153 is a processing unit for converting the joint coordinate data into joint angles. Regarding each body region, the length of that body region as determined by the joint coordinates, which are obtained as a result of learning-type skeletal frame recognition, does not necessarily match with the length of the same body region in the cylindrical model. Hence, for example, the converting unit 153 converts the joint angles obtained from the joint coordinates, which are obtained as a result of learning-type skeletal frame recognition, into joint angles for the cylindrical model. Then, the converting unit 153 outputs the joint angle data to the evaluation processing unit 154. Meanwhile, the converting unit 153 assigns the frame numbers, which are assigned to the sets of joint coordinate data, to the sets of joint angle data.

The converting unit 153 repeatedly performs, in order of frame numbers, the operation of converting the joint coordinate data, which is obtained as a result of learning-type skeletal frame recognition, into joint angle data for the cylindrical model.

The evaluation processing unit 154 is a processing unit that performs the three types of fitting using the respective three initial value sets, and evaluates the fitting results. Then, the evaluation processing unit 154 outputs the most probable fitting result as the final-version skeletal frame recognition result to the element recognizing unit 155.

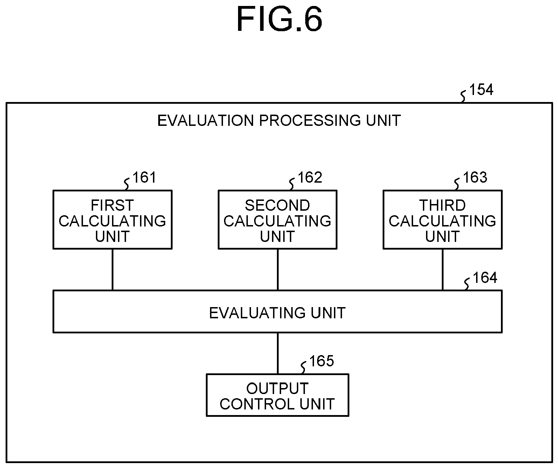

FIG. 6 is a functional block diagram illustrating a configuration of the evaluation processing unit according to the first embodiment. As illustrated in FIG. 6, the evaluation processing unit 154 includes a first calculating unit 161, a second calculating unit 162, a third calculating unit 163, an evaluating unit 164, and an output control unit 165.

The first calculating unit 161 is a processing unit that performs the first-type fitting. The first calculating unit 161 obtains, from the evaluating unit 164, the skeletal frame recognition result data that is identified as a result of performing the fitting with respect to the point group frame corresponding to the frame number n-1. Herein, the joint angles of the cylindrical model data 143 identified from the skeletal frame recognition result data represent the first-type initial value. In the following explanation, the skeletal frame recognition result data identified from the point group frame corresponding to the frame number n-1 is referred to as skeletal frame recognition result data corresponding to the frame number n-1.

In the case of performing the fitting with respect to the point group frame corresponding to the frame number n, the first calculating unit 161 sets the first-type initial value as the initial value set of the cylindrical model data 143. The first calculating unit 161 implements the EM (Expectation Maximization) algorithm and calculates such joint angles of the cylindrical model data 143 for which the value of the evaluation function is the minimum value. Then, the first calculating unit 161 outputs the result of the first-type fitting and the likelihood to the evaluating unit 164. Herein, it is indicated that, smaller the value of the evaluation function, the shorter is the distance to the point group model and the higher is the probability (likelihood). Thus, "the likelihood is the reciprocal of the value of the evaluation function".

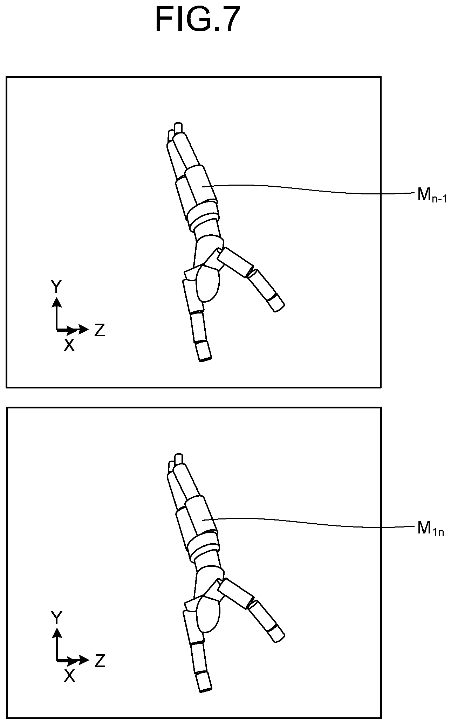

FIG. 7 is a diagram for explaining the first-type initial value. With reference to FIG. 7, a model $M_{n-1}$ represents the skeletal frame recognition result data corresponding to the frame number n-1. A model $M_{1n}$ represents the cylindrical model data 143 in which the first-type initial value set is set. The joint angles in the model $M_{1n}$ are same as the joint angles in the model $M_{n-1}$.

The second calculating unit 162 is a processing unit that performs the second-type fitting. The second calculating unit 162 obtains, from the evaluating unit 164, the skeletal frame recognition result data identified from the point group frames corresponding to the frame numbers n-1 and n-1; and calculates the immediately preceding posture change rate (the angular velocity) of each joint angle. The second calculating unit 162 calculates an immediately preceding posture change rate $\Delta\theta_{n-1}$ using Equation (1). In Equation (1), $\theta_{n-1}$ represents the joint angle identified from the skeletal frame recognition result data corresponding to the frame number n-1. Moreover, $\theta_{n-2}$ represents the joint angle identified from the skeletal frame recognition result data corresponding to the frame number n-2.

$$\Delta\theta_{n-1} = \theta_{n-1} - \theta_{n-2} \qquad (1)$$

The second calculating unit 162 predicts the joint angle $\theta_n$ corresponding to the frame number n using Equation (2). The second calculating unit 162 uses the joint angle $\theta_n$, which is predicted using Equation (2), as the second-type initial value.

$$\theta_n = \theta_{n-1} + \Delta\theta_{n-1} \qquad (2)$$

In the case of performing fitting with respect to the point group frame corresponding to the frame number n, the second calculating unit 162 sets the second-type initial value as the initial value of the cylindrical model data 143.

The second calculating unit 162 implements an EM algorithm and calculates such joint angles of the cylindrical model data 143 for which the value of the evaluation function is the minimum value. Then, the second calculating unit 162 outputs the result of the second-type fitting and the likelihood to the evaluating unit 164.

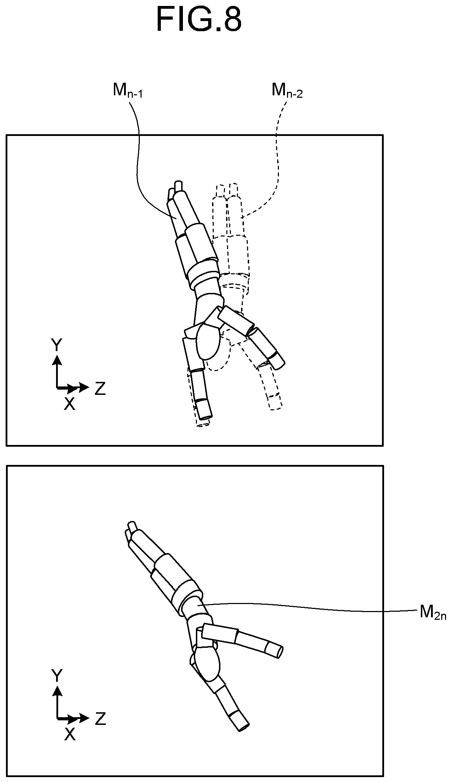

FIG. 8 is a diagram for explaining the second-type initial value. With reference to FIG. 8, the model $M_{n-1}$ represents the skeletal frame recognition result data corresponding to the frame number n-1. A model $M_{n-2}$ represents the skeletal frame recognition result data corresponding to the frame number n-2. A model $M_{2n}$ represents the cylindrical model data 143 in which the second-type initial value is set. The joint angles in the model $M_{2n}$ are predicted from the joint angles in the models $M_{n-1}$ and $M_{n-2}$.

The third calculating unit 163 is a processing unit that performs the third-type fitting. The third calculating unit 163 obtains the data of the joint angles corresponding to the frame n from the converting unit 153, and sets the data as the third-type initial value set.

In the case of performing the fitting with respect to the point group frame corresponding to the frame number n, the third calculating unit 163 sets the third-type initial value set as the initial value set of the cylindrical model data 143. The third calculating unit 163 implements an EM algorithm and calculates such joint angles of the cylindrical model data 143 for which the value of the evaluation function is the minimum value. Then, the third calculating unit 163 outputs the result of the third-type fitting and the likelihood to the evaluating unit 164.

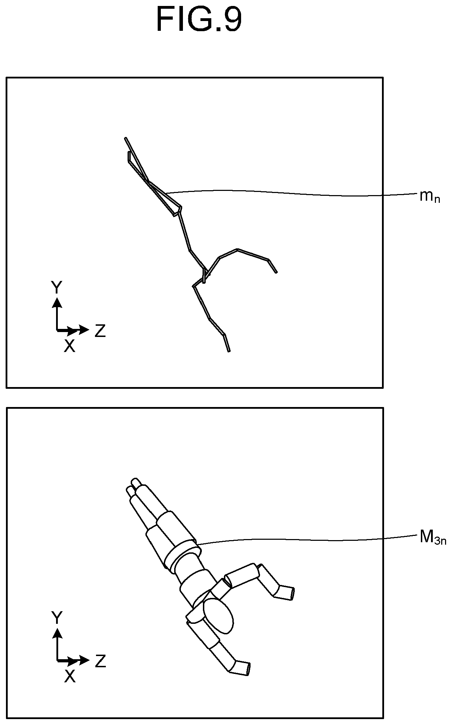

FIG. 9 is a diagram for explaining the third-type initial value set. With reference to FIG. 9, the learning-type skeletal frame result $m_n$ represents a model formed by piecing together the joint coordinates that are obtained when the range image data corresponding to the frame number n is input to the skeletal frame recognition model 6B. A model $M_{3n}$ represents the cylindrical model data 143 in which the third-type initial value is set. The joint angles in the learning-type skeletal frame recognition result $m_n$ are identical to the joint angles in the model $M_{3n}$.

Given below is the explanation of an example of the EM algorithm implemented by the first calculating unit 161. Regarding the EM algorithms implemented by the second calculating unit 162 and the third calculating unit 163, other than the fact that the initial value sets are different, the EM algorithms are identical to the EM algorithm implemented by the first calculating unit 161. Hence, the explanation of those EM algorithms is not given.

In the EM algorithm, the first calculating unit 161 repeatedly performs an E step and an M step so as to update the cylinder parameters (the joint angles) of the cylindrical model data 143, and thus optimizes the cylinder parameters.

In the E step, the point group included in a point group frame, and the surface residual and the posterior distribution of the body regions in the cylindrical model data 143 are calculated based on the result of point group allocation; and the evaluation function is updated.

In the M step, based on the evaluation function updated in the E step, the cylindrical parameters are so updated that the value of the evaluation function is the minimum value. Herein, smaller the value of the evaluation function, the higher is the extent of matching of the point group with the body regions in the cylindrical model data 143.

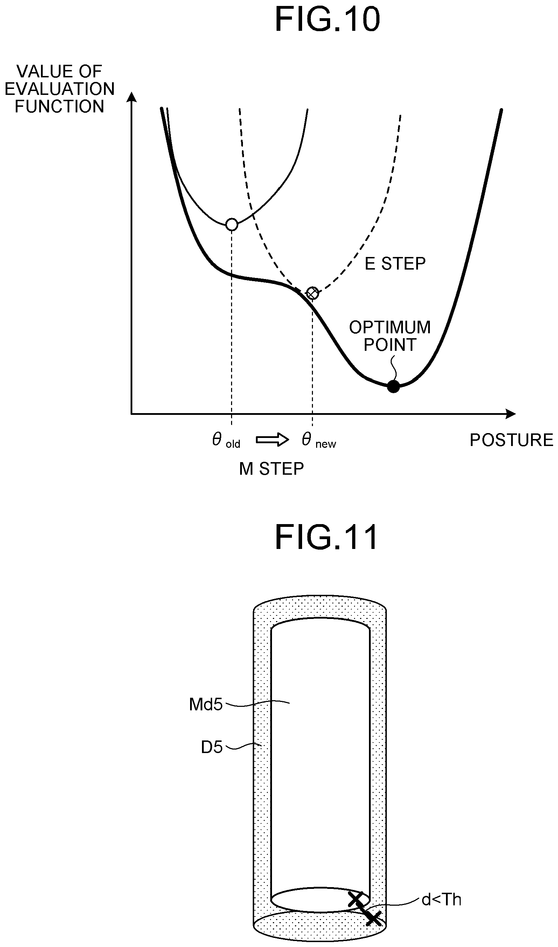

FIG. 10 is a diagram illustrating the relationship between the E step and the M step. In the graph illustrated in FIG. 10, the horizontal axis represents the posture (equivalent to the cylinder parameters). Moreover, in the graph illustrated in FIG. 10, the vertical axis represents the likelihood of the evaluation function. For example, if the M step is performed based on the evaluation function updated in the first instance of the E step, then the local minimum value is as indicated by $\theta_{old}$. If the M step is performed based on the evaluation function updated in the second instance of the E step, then the local minimum value is as indicated by $\theta_{new}$. As a result of repeatedly performing the E step and the M step, the cylindrical parameter moves closer to the optimum point. In the first embodiment, it is assumed that, smaller the evaluation function, the higher is the probability.

Given below is the explanation of an example of the E step performed by the first calculating unit 161. The first calculating unit 161 compares the cylindrical model data 143 of the initial posture with the point group frame, and calculates a posterior distribution $p_{nm}$ of the point group. The cylindrical model data 143 of the initial posture represents the cylindrical model data 143 in which the first-type initial value set is set.

The posterior distribution $p_{nm}$ is defined using Equation (3). In Equation (3), "n" represents a point included in the point group frame. When there are $n_a$ number of points in the point group frame, $n=1\sim n_a$ holds true. Moreover, "M" represents a cylindrical form (body region) in the cylindrical model data 143. As illustrated in FIG. 4, when there are 14 body regions identified by the sets of region identification information Md1 to Md14, m=1 to 14 (Md1 to Md14) holds true.

$$P_{nm} = \frac{\exp\left(-\frac{\varepsilon_m\left(x_n,\sigma^2\right)}{2\sigma^2}\right)}{\sum_{m=1}^{M}\exp\left(-\frac{\varepsilon_m\left(x_n,\sigma^2\right)}{2\sigma^2}\right)} \tag{3}$$

In Equation (3), $\varepsilon_m$ represents the surface residual, and it is assumed that the point group allocation is a gaussian distribution. The surface residual indicates the difference in the vertical direction between the point group and the outer surface of the m-th cylindrical form. For example, the first cylindrical form represents the cylindrical form having the body region identification number Md1. The surface residual $\varepsilon_m$ is identified using $x_n$ and $\sigma^2$. Herein, $x_n$ represents the three-dimensional coordinates of the n-th point. Moreover, $\sigma$ represents the dispersion of the three-dimensional coordinates of the point group included in the point group frame.

After calculating the posterior distribution $p_{nm}$, the first calculating unit 161 updates an evaluation function Q defined in Equation (4). In Equation (4), P represents the sum of the posterior distributions $p_{nm}$.

$$Q\left(\theta,\sigma^2\right) = \frac{P}{2}\left[1 - \ln P + \ln \sum_{m=1}^{M} p_{nm}\varepsilon_m\left(x_n,\sigma^2\right)\right] \tag{4}$$

Given below is the explanation of an example of the M step performed by the first calculating unit 161. The first calculating unit 161 implements the Levenberg-Marquardt (LM) method and calculates a variation $\Delta\theta$ of the cylinder parameter in such a way that the likelihood of the evaluation function Q becomes the minimum. For example, the first calculating unit 161 calculates the variation $\Delta\theta$ based on Equations (5) and (6). Meanwhile, instead of implementing the LM method, the first calculating unit 161 can generate the variation $\Delta\theta$ in a random manner.

$$\left(J_\theta^T J_\theta + \lambda \mathrm{diag}\left(J_\theta^T J_\theta\right)\right)\Delta\theta = -J_\theta^T \varepsilon \tag{5}$$

$$J_\theta = \frac{\partial \varepsilon_{nm}}{\partial \theta} \tag{6}$$

The first calculating unit 161 calculates the likelihood by inputting, to the evaluation function Q, the value obtained by adding the variation $\Delta\theta$ to the current cylinder parameter. Herein, the likelihood is equivalent to the reciprocal of the value of the evaluation function Q.

The first calculating unit 161 repeatedly performs the E step and the M step until a predetermined convergence condition is satisfied. Alternatively, the first calculating unit 161 can set, in advance, the number of times for which the E step and the M step are to be performed. Then, the first calculating unit 161 outputs the following to the evaluating unit 164: the cylinder parameter present at the point of time of satisfying the predetermined convergence condition; and the likelihood that is equivalent to the reciprocal of the evaluation function Q. The cylinder parameter output by the first calculating unit 161 corresponds to "the result of the first-type processing".

In an identical manner, the second calculating unit 162 too repeatedly performs the E step and the M step until a predetermined convergence condition is satisfied. Alternatively, the second calculating unit 162 can set, in advance, the number of times for which the E step and the M step are to be performed. Then, the second calculating unit 162 outputs the following to the evaluating unit 164: the cylinder parameter present at the point of time of satisfying the predetermined convergence condition; and the likelihood that is equivalent to the reciprocal of the evaluation function Q. The cylinder parameter output by the second calculating unit 162 corresponds to "the result of the second-type processing".

In an identical manner, the third calculating unit 163 too repeatedly performs the E step and the M step until a predetermined convergence condition is satisfied. Alternatively, the third calculating unit 163 can set, in advance, the number of times for which the E step and the M step are to be performed. Then, the third calculating unit 163 outputs the following to the evaluating unit 164: the cylinder parameter present at the point of time of satisfying the predetermined convergence condition; and the likelihood that is equivalent to the reciprocal of the evaluation function Q. The cylinder parameter output by the third calculating unit 163 corresponds to "the result of the third-type processing".

Returning to the explanation with reference to FIG. 6. Based on the likelihoods of the results of the first-type processing to the third-type processing, the evaluating unit 164 evaluates the results of the first-type processing to the third-type processing and identifies, from among the results of the first-type processing to the third-type processing, the result to be treated as the final-version skeletal frame recognition result data. The evaluating unit 164 performs the abovementioned operation for each frame number. Then, the evaluating unit 164 outputs the sets of skeletal frame recognition result data, which are identified on a frame-by-frame basis, to the first calculating unit 161, the second calculating unit 162, and the output control unit 165.

The evaluating unit 164 identifies the final-version skeletal frame recognition result data by performing: an operation of identifying the order of priority of the results of the first-type processing to the third-type processing; a first-type screening operation; and a second-type screening operation.

Given below is the explanation of the operation of identifying the order of priority as performed by the evaluating unit 164. Based on the data of the event presented by the photographic subject 1 and based on the priority table 144; the evaluating unit 164 identifies the order of priority of the results of the first-type processing to the third-type processing. In the following explanation, the result of the processing to be given the highest priority is referred to as a first set of Itr information; the result of the processing to be given the second highest priority is referred to as a second set of Itr information; and the result of the processing to be given the third highest priority is referred to as a third set of Itr information. The evaluating unit 164 sets the first set of Itr information as the "interim Itr".

For example, in the case of the event "pommel horse", "the result of the first-type processing" represents the first set of Itr information. Moreover, "the result of the second-type processing" represents the second set of Itr information. Furthermore, "the result of the third-type processing" represents the third set of Itr information.

The following explanation is given about the first-type screening operation performed by the evaluating unit 164. The evaluating unit 164 determines whether or not the second set of Itr information complies with a first rejection condition. If the second set of Itr information complies with the first rejection condition, then the evaluating unit 164 rejects the second set of Itr information. Herein, the explanation is given about the case in which the result of the second-type processing represents the second set of Itr information.

The evaluating unit 164 identifies the skeletal frame recognition result corresponding to the frame number n-1 based on the cylinder parameter representing the result of the second-type processing corresponding to the frame number n-1. Moreover, the evaluating unit 164 identifies the skeletal frame recognition result corresponding to the frame number n based on the cylinder parameter representing the result of the second-type processing corresponding to the frame number n.

The evaluating unit 164 compares the skeletal frame recognition result corresponding to frame number n-1 with the skeletal frame recognition result corresponding to frame number n, and identifies whether or not the movement of the skeletal frame is abnormal (whether or not the bodily movements have exceeded the kinematic limit or the range of joint motion). If the amount of movement of the skeletal frame is equal to or greater than the reference amount of movement set in advance or if the direction of movement of the skeletal frame is different than the reference direction of movement set in advance, then the evaluating unit 164 determines that the movement of the skeletal frame is abnormal. When the movement of the skeletal frame is abnormal, the evaluating unit 164 determines that the first rejection condition is complied with.

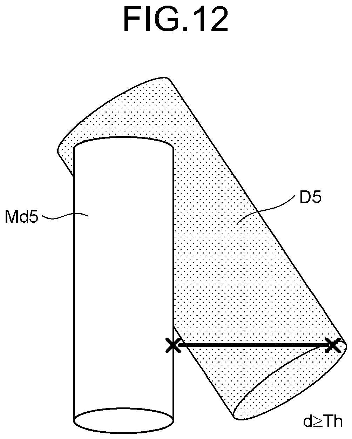

Meanwhile, the evaluating unit 164 can determine the compliance with the rejection condition based on the Close Point. FIGS. 11 and 12 are diagrams for explaining the Close Point. The evaluating unit 164 sets the cylinder parameter, which represents the result of the second-type processing corresponding to the frame number n, in the cylindrical model data 143; and compares the cylindrical forms in the cylindrical model data 143 with the point group frame corresponding to the frame number n.

With reference to FIG. 11, the explanation is given about a cylindrical form Md5 of the left-side arm from among the cylindrical forms in the cylindrical model data 143. It is assumed that the cylindrical form Md5 has a point group D5 assigned thereto. The evaluating unit 164 calculates a shortest distance d from each point in the point group D5 to the cylindrical form Md5. Then, the evaluating unit 164 counts the number of points for which the shortest distance d is smaller than a threshold value Th, and treats that count as the Close Point. If there are 100 points in the point group D5 and if the shortest distance d for all points is smaller than the threshold value Th, then the Close Point becomes equal to 100.

With reference to FIG. 12, the explanation is given about the cylindrical form Md5 of the left-side arm from among the cylindrical forms in the cylindrical model data 143. It is assumed that the cylindrical form Md5 has the point group D5 assigned thereto. The evaluating unit 164 calculates the shortest distance d from each point in the point group D5 to the cylindrical form Md5. Then, the evaluating unit 164 counts the number of points for which the shortest distance d is smaller than the threshold value Th, and treats that count as the Close Point. If there are 100 points in the point group D5 and if the shortest distance d for 30 of those 100 points is smaller than the threshold value Th, then the Close Point becomes equal to 30.

When the ratio of the Close Point with respect to the number of point groups allocated to a particular cylindrical form is smaller than a predetermined ratio, the evaluating unit 164 determines that the first rejection condition is complied with.

As a result of performing the first-type screening operation, if the second set of Itr information does not get rejected, then the evaluating unit 164 compares the likelihood of the interim Itr with the likelihood of the second set of Itr information. If the likelihood obtained by subtracting the likelihood of the likelihood of the interim Itr from the second set of Itr information is equal to or greater than a threshold value, then the evaluating unit 164 updates the interim Itr with the second set of Itr information. That is, when the likelihood of the second set of Itr information is decisively greater than the likelihood of the interim Itr, then the interim Itr is updated with the second set of Itr information.

Regarding the third set of Itr information too, in an identical manner to the second set of Itr information, the evaluating unit 164 determines whether the third set of Itr information complies with the first rejection condition. If the third set of Itr information does not get rejected, then the evaluating unit 164 compares the likelihood of the interim Itr with the likelihood of the third set of Itr information. If the likelihood obtained by subtracting the likelihood of the likelihood of the interim Itr from the third set of Itr information is equal to or greater than a threshold value, then the evaluating unit 164 updates the interim Itr with the third set of Itr information. That is, when the likelihood of the third set of Itr information is decisively greater than the likelihood of the interim Itr, then the interim Itr is updated with the third set of Itr information.

The following explanation is given about the second-type screening operation performed by the evaluating unit 164. The evaluating unit 164 determines whether or not the second set of Itr information complies with a second rejection condition. If the second set of Itr information complies with the second rejection condition, then the evaluating unit 164 rejects the second set of Itr information. Herein, it is assumed that the second set of Itr information was not rejected in the first-type screening operation, and that the difference between the likelihood of the interim Itr and the likelihood of the second set of Itr information is smaller than a threshold value.

Then, based on the cylinder parameter of the interim Itr, the evaluating unit 164 identifies the skeletal frame recognition result (the interim skeletal frame recognition result). Moreover, based on the cylinder parameter of the second set of Itr information, the evaluating unit 164 identifies the skeletal frame recognition result. If the difference between the interim skeletal frame recognition result and the skeletal frame recognition result is equal to or greater than a threshold value, then the evaluating unit 164 determines that the second rejection condition is complied with. That is, if the interim skeletal frame recognition result, which has been given priority, is significantly different than the skeletal frame recognition result of the second set of Itr information, then the second set of Itr information is rejected.

As a result of performing the second-type screening operation, if the second set of Itr information does not get rejected, then the evaluating unit 164 compares the likelihood of the interim Itr with the likelihood of the second set of Itr information. If the likelihood of the second set of Itr information is greater than the likelihood of the interim Itr, then the evaluating unit 164 updates the interim Itr with the second set of Itr information.

Regarding the third set of Itr information too, in an identical manner to the second set of Itr information, the evaluating unit 164 determines whether or not the third set of Itr information complies with the second rejection condition. If the third set of Itr information does not get rejected, then the evaluating unit 164 compares the likelihood of the interim Itr with the likelihood of the third set of Itr information. If the likelihood of the third set of Itr information is greater than the likelihood of the interim Itr, then the evaluating unit 164 updates the interim Itr with the third set of Itr information.

As explained above, the evaluating unit 164 performs the operation of identifying the order or priority, performs the first-type screening operation, and performs the second-type screening operation; and identifies the final-version skeletal frame recognition result data. Every time the results of the first-type processing to the third-type processing for each frame number are obtained from the first calculating unit 161, the second calculating unit 162, and the third calculating unit 163, respectively; the evaluating unit 164 identifies the final-version skeletal frame recognition result data. Then, the evaluating unit 164 outputs the final-version skeletal frame recognition result data to the output control unit 165.

The output control unit 165 is a processing unit that sequentially receives the final-version skeletal frame recognition result data corresponding to each frame number, and outputs the received final-version skeletal frame recognition result data to the element recognizing unit 155. In the following explanation, the received final-version skeletal frame recognition result data that is output to the element recognizing unit 155 is simply referred to as the skeletal frame recognition result data.

Returning to the explanation with reference to FIG. 2, the element recognizing unit 155 obtains, from the evaluation processing unit 154, the sets of skeletal frame recognition result data in order of frame numbers; and, based on the successive sets of skeletal frame recognition result data, identifies the time-series variation of the joint coordinates. Then, the element recognizing unit 155 compares the time-series variation of the joint coordinates with the element recognition table 145; and identifies the types of elements. Moreover, the element recognizing unit 155 compares the combinations of the types of elements with the element recognition table 145, and calculates the score of the act presented by the photographic subject 1.

The element recognizing unit 155 outputs the following information to the screen information output control unit 156: the types of elements included in the act, the score of the act, and the skeletal frame recognition result data from the start to the end of the act.

The screen information output control unit 156 generates screen information based on the score of the act and based on the skeletal frame recognition result data from the start to the end of the act. Then, the screen information output control unit 156 outputs the generated screen information to the display unit 130 for display purposes.

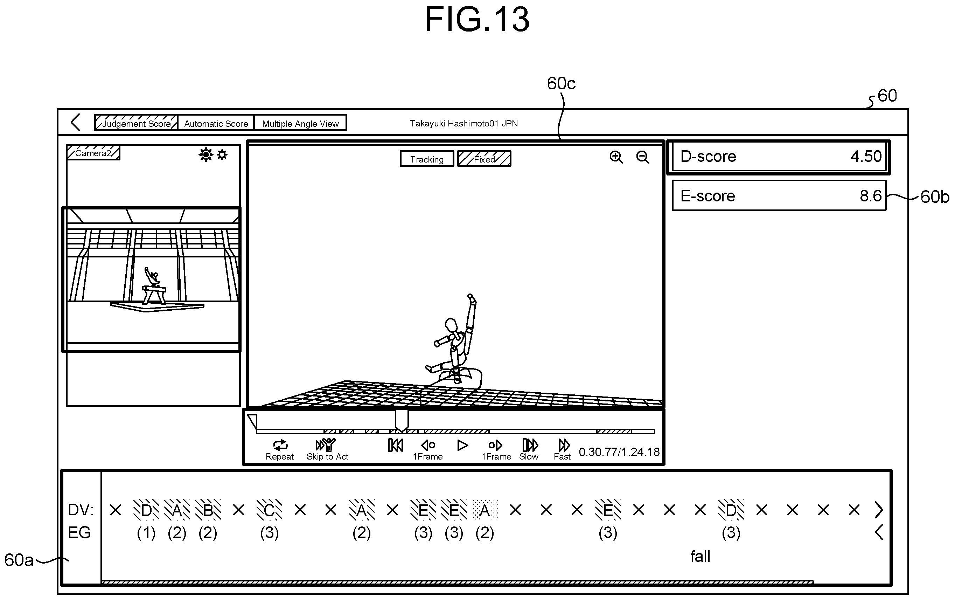

FIG. 13 is a diagram illustrating an example of the screen information. As illustrated in FIG. 13, in screen information 60; regions 60a, 60b, and 60c are included. The region 60a is a region for displaying the types of elements recognized during the act presented by the photographic subject 1. In addition to displaying the types of elements, the levels of difficulty of the elements can also be displayed. The region 60b is a region for displaying the score of the act. The region 60c is a region for displaying, as an animation, the three-dimensional model based on the skeletal frame recognition result data from the start to the end of the act. The user operates the input unit 120 and instructs to play or to stop the animation.

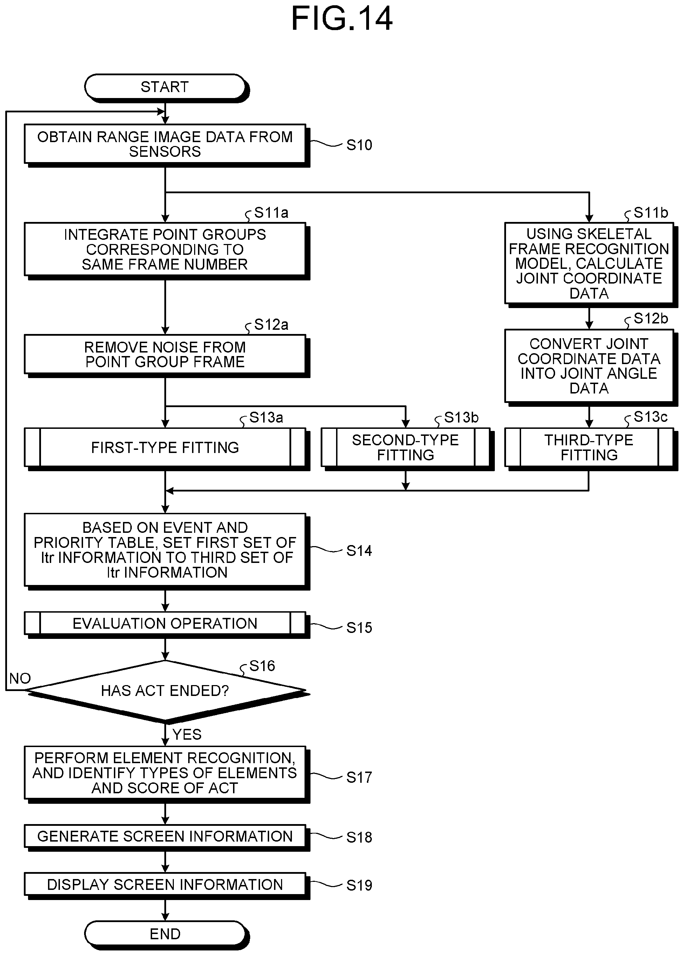

Given below is the explanation of an exemplary sequence of operations performed in the information processing device 100 according to the first embodiment. FIG. 14 is a flowchart for explaining a sequence of operations performed in the information processing device according to the first embodiment. As illustrated in FIG. 14, in the information processing device 100, the obtaining unit 151 obtains the range image data from the sensors 10 (Step S10).

The obtaining unit 151 integrates the point groups corresponding to the same frame number (Step S11a). Then, the obtaining unit 151 removes noise from the point group frame (Step S12a). Moreover, in the information processing device 100, the learning-type skeletal frame recognition executing unit 152 calculates the joint coordinate data using a learning-type skeletal frame recognition model (Step S11b). Then, in the information processing device 100, the converting unit 153 converts the joint coordinate data into the joint angle data (Step S12b).

In the information processing device 100, the evaluation processing unit 154 performs the first-type fitting, the second-type fitting, and the third-type fitting in parallel (Steps S13a, S13b, and S13c). Then, based on the event and the priority table 144, the evaluation processing unit 154 sets the first set of Itr information to the third set of Itr information (Step S14).

The evaluation processing unit 154 performs the evaluation operation (Step S15). In the information processing device 100, if the act of the photographic subject 1 has not ended (No at Step S16), then the system control returns to Step S10. On the other hand, in the information processing device 100, if the act of the photographic subject 1 has ended (Yes at Step S16), then the system control proceeds to Step S17.

In the information processing device 100, the element recognizing unit 155 performs element recognition and identifies the types of elements and the score of the act (Step S17). Then, in the information processing device 100, the screen information output control unit 156 generates screen information based on the recognition result (Step S18). The screen information output control unit 156 displays the screen information in the display unit 130 (Step S19).

Given below is the explanation of the sequence of operations performed in the fitting (the first-type fitting, the second-type fitting, and the third-type fitting) at Step S13 illustrated in FIG. 14. In the first-type fitting, the second-type fitting, and the third-type fitting; the first calculating unit 161, the second calculating unit 162, and the third calculating unit 163 respectively perform the fitting.

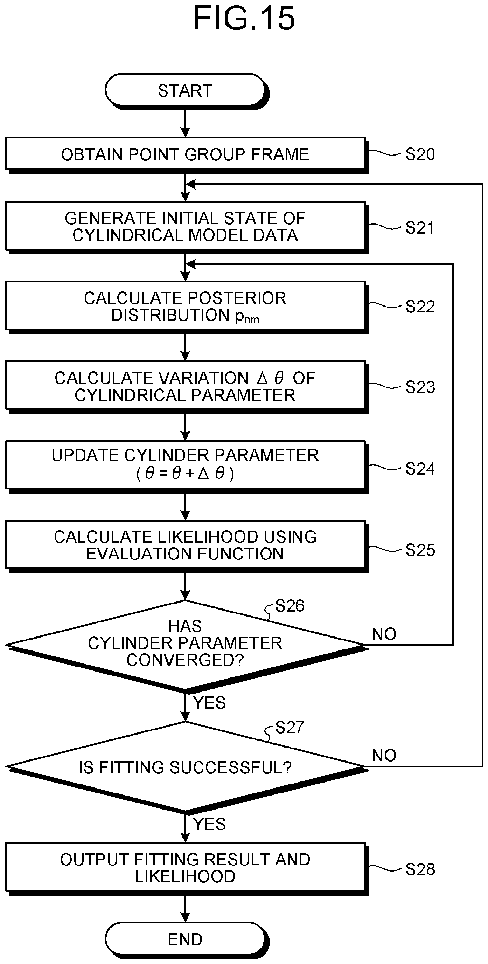

FIG. 15 is a flowchart for explaining the sequence of operations performed in the fitting. With reference to FIG. 15, as an example, the explanation is given about the first-type fitting performed by the first calculating unit 161. Regarding the second-type fitting performed by the second calculating unit 162 and the third-type fitting performed by the third calculating unit 163; as explained earlier, other than the fact that the setting of the initial value set is different, the fitting is identical to the first-type fitting performed by the first calculating unit 161. Hence, that explanation is not given again.

As illustrated in FIG. 15, in the information processing device 100, the first calculating unit 161 obtains a point group frame (Step S20). Then, the first calculating unit 161 generates an initial value state of the cylindrical model data 143 (Step S21).

Moreover, the first calculating unit 161 calculates the posterior distribution $p_{nm}$ (Step S22). Furthermore, the first calculating unit 161 calculates the variation $\Delta\theta$ of the cylinder parameter (Step S23). Accordingly, the first calculating unit 161 updates the cylinder parameter (Step S24). Then, the first calculating unit 161 calculates the likelihood using the evaluation function Q (Step S25).

The first calculating unit 161 determines whether or not the cylinder parameter has converged (Step S26). At Step S26, if the variation $\Delta\theta$ has become sufficiently smaller (smaller than a threshold value $Th\theta$ set in advance), then the first calculating unit 161 determines that the cylinder parameter has converged.

If the cylinder parameter has not converged (No at Step S26), then the system control returns to Step S22. On the other hand, if the cylinder parameter has converged (Yes at Step S26), then the system control proceeds to Step S27.

The first calculating unit 161 determines whether or not the fitting is successful (Step S27). At Step S27, if the sum of the posterior distributions $p_{nm}$ is equal to or greater than a threshold value Thp set in advance, then the first calculating unit 161 determines that the fitting is successful.

If the fitting is not successful (No at Step S27), then the system control returns to Step S21. On the other hand, if the fitting is successful (Yes at Step S27), then the system control proceeds to Step S28.

The first calculating unit 161 outputs the fitting result and the likelihood to the evaluating unit 164 (Step S28). For example, the fitting result includes the cylinder parameter for which the fitting was successful.

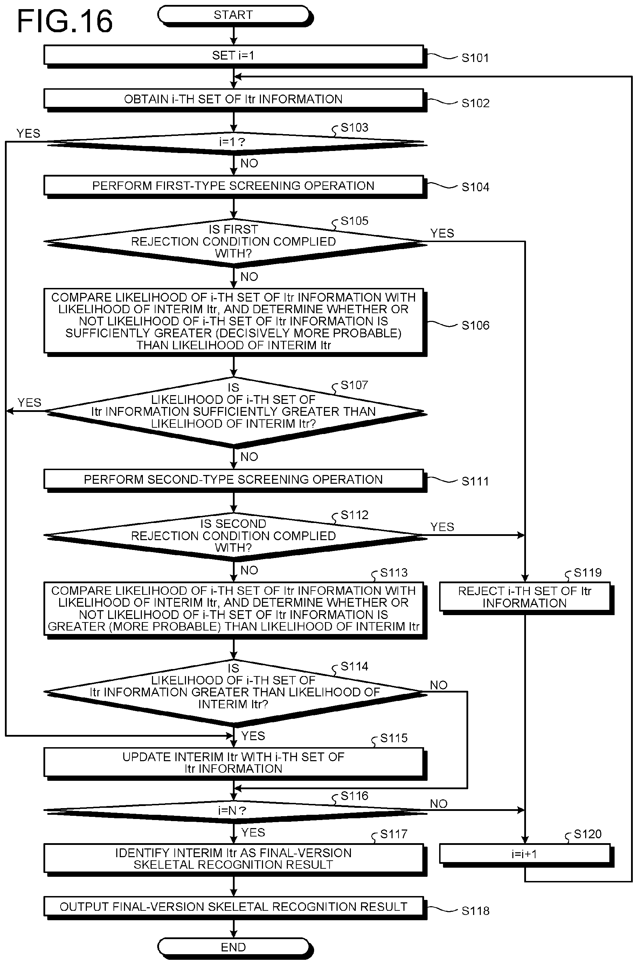

Given below is the explanation of the sequence of operations performed in the evaluation operation at Step S15 illustrated in FIG. 14. FIG. 16 is a flowchart for explaining the sequence of operations performed in the evaluation operation. As illustrated in FIG. 16, in the information processing device 100, the evaluating unit 164 sets i=1 (Step S101). Then, the evaluating unit 164 obtains the i-th set of Itr information (Step S102).

When i=1 holds true (Yes at Step S103), the system control proceeds to Step S115. On the other hand, if i=1 does not hold true (No at Step S103), then the system control proceeds to Step S104.

The evaluating unit 164 performs the first-type screening operation (Step S104). The evaluating unit 164 determines whether or not the first rejection condition is complied with (Step S105). If the first rejection condition is complied with (Yes at Step S105), then the system control proceeds to Step S119. On the other hand, if the first rejection condition is not complied with (Yes at Step S105), then the system control proceeds to Step S106.

The evaluating unit 164 determines whether the likelihood of the i-th set of Itr information is sufficiently greater (is more probable) than the likelihood of the interim Itr (Step S106). If the likelihood of the i-th set of Itr information is sufficiently greater than the likelihood of the interim ITr (Yes at Step S107), then the system control proceeds to Step S115. On the other hand, if the likelihood of the i-th set of Itr information is not sufficiently greater than the likelihood of the interim ITr (No at Step S107), then the system control proceeds to Step S111.

The evaluating unit 164 performs the second-type screening operation (Step S111). The evaluating unit 164 determines whether or not the second rejection condition is complied with (Step S112). If the second rejection condition is complied with (Yes at Step S112), then the system control proceeds to Step S119. On the other hand, if the second rejection condition is not complied with (No at Step S112), then the system control proceeds to Step S113.

The evaluating unit 164 determines whether or not the likelihood of the i-th set of Itr information is sufficiently greater than the likelihood of the interim Itr (Step S114). If the likelihood of the i-th set of Itr information is sufficiently greater than the likelihood of the interim Itr (Yes at Step S114), then the system control proceeds to Step S115. On the other hand, if the likelihood of the i-th set of Itr information is not sufficiently greater than the likelihood of the interim Itr (No at Step S114), then the system control proceeds to Step S116.

The evaluating unit 164 updates the interim Itr with the i-th set of Itr information (Step S115). Then, the evaluating unit 164 determines whether or not i=N holds true (Step S116). In the first embodiment, N=3 is set. If i=N holds true, the system control proceeds to Step S117. On the other hand, if i=N does not hold true, then the system control proceeds to Step S120.

The evaluating unit 164 identifies the interim Itr as the final-version skeletal frame recognition result (Step S117). Then, in the information processing device 100, the output control unit 165 outputs the final-version skeletal frame recognition result to the element recognizing unit 155 (Step S118).

Given below is the explanation of the operations performed from Step S119 onward. The evaluating unit 164 rejects the i-th set of Itr information (Step S119). Then, the evaluating unit 164 updates the value of i to i+1 (Step S120), and the system control returns to Step S102.

Given below is the explanation of the effects achieved in the information processing device 100 according to the first embodiment. In the information processing device 100, three types of fitting, in which three types of initial value sets are used, are performed with respect to a point group frame; and the most probable fitting result is identified and output as the final-version skeletal frame recognition result. As a result, for each point group frame, from among the three fitting results, the fitting result having the highest degree of accuracy can be output.

In the information processing device 100; the first calculating unit 161, the second calculating unit 162, and the third calculating unit 163 perform the fitting in parallel. As a result, a plurality of fitting results can be obtained in about the same period of time as in the case in which only a single fitting operation is performed.

The information processing device 100 compares the skeletal frame recognition result corresponding to the frame number n-1 with the skeletal frame recognition result corresponding to the frame number n; evaluates whether or not the movements of the skeletal frame are abnormal; and rejects the skeletal frame recognition result indicating abnormality in the movements of the skeletal frame. In this way, the information processing device 100 can perform evaluation by also using the restrictions related to the movements of the photographic subject, and can exclude the skeletal frame recognition results indicating abnormality in the movements of the skeletal frame from the final-version skeletal frame recognition result.

In the information processing device 100, the first-set of Itr information is set as the output candidate; and, if the value obtained by subtracting the likelihood of the output candidate from the likelihood of the second set of Itr information is equal to or greater than a threshold value, then the second set of Itr information is set as the output candidate. Moreover, if the value obtained by subtracting the likelihood of the output candidate from the likelihood of the third set of Itr information is equal to or greater than the threshold value, then the third set of Itr information is set as the output candidate. Thus, the first set of information can be set as the output candidate with priority. The information to be set in the first set of Itr information is identified based on the event and the priority table 144.

In the information processing device 100, if the difference between the information set as the output candidate and the second set of Itr information is within a predetermined range and if the likelihood of the second set of information is greater than the likelihood of the output candidate, then the second set of Itr information is set as the output candidate. Similarly, if the difference between the information set as the output candidate and the third set of Itr information is within a predetermined range and if the likelihood of the third set of information is greater than the likelihood of the output candidate, then the third set of Itr information is set as the output candidate.

[Second embodiment]

Given below is the explanation of an information processing system according to a second embodiment. In an identical manner to the information processing system explained with reference to FIG. 1, the information processing system according to the second embodiment includes the sensors 10a and 10b; and an information processing device is connected to the sensors 10a and 10b.

The information processing device according to the second embodiment identifies scenes of the act of the photographic subject and, depending on the identified scenes, varies the constraint conditions for performing the fitting and varies the method for calculating the value of the evaluation function. The constraint conditions include the range of joint motion, the degree of freedom of the joints, and the movement symmetry. In the second embodiment too, it is assumed that, smaller the evaluation function, the higher is the probability.

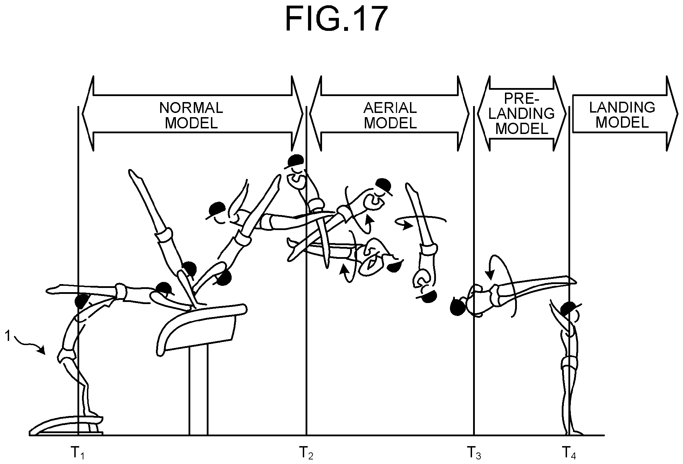

FIG. 17 is a diagram for explaining the operations performed in the information processing device according to the second embodiment. In FIG. 17, as an example, the explanation is given about the case in which the photographic subject 1 vaults. The information processing device sequentially identifies a series of scenes of the act presented by the photographic subject 1.

For example, the information processing device identifies the scene of the act in the period of time from $T_1$ to $T_2$ as a general element scene (asymmetric). Moreover, the information processing device identifies the scene of the act in the period of time from $T_2$ to $T_3$ as an aerial element. Furthermore, the information processing device identifies the scene of the act in the period of time from $T_3$ to $T_4$ as a pre-landing scene. Moreover, the information processing device identifies the scene of the act from the timing $T_4$ onward as a landing scene.

In the case of a general element scene (asymmetric), the information processing device performs the fitting based on a "normal model". The fitting based on a normal model is identical to the fitting performed in the first embodiment.

In the case of an aerial scene, the information processing device performs the fitting based on an "aerial model". In the fitting based on the aerial model, correction is performed so as to increase the evaluation function Q in proportion to the variation in the arms and legs as compared to the previous frame.

In the case of a pre-landing scene, the information processing device performs the fitting based on a "pre-landing model". In the fitting based on the pre-landing model, correction is performed so as to increase the evaluation function Q in proportion to the variation in the arms and legs as compared to the previous frame.

In the case of a landing scene, the information processing device performs the fitting based on a "landing model". In the fitting based on the landing model, the fitting is performed by restricting the range of joint motion of the ankles. For example, the information processing device restricts the range of joint motion in such a way that the positions of the ankles stay close to the vicinity of the floor.

In this way, the information processing device according to the second embodiment identifies the scenes of the act of the photographic subject and, depending on the identified scenes, varies the constraint conditions for performing the fitting and varies the method for calculating the value of the evaluation function. As a result, it becomes possible to perform the most suitable fitting according to the scenes, and to enhance the accuracy of the skeletal frame recognition result.

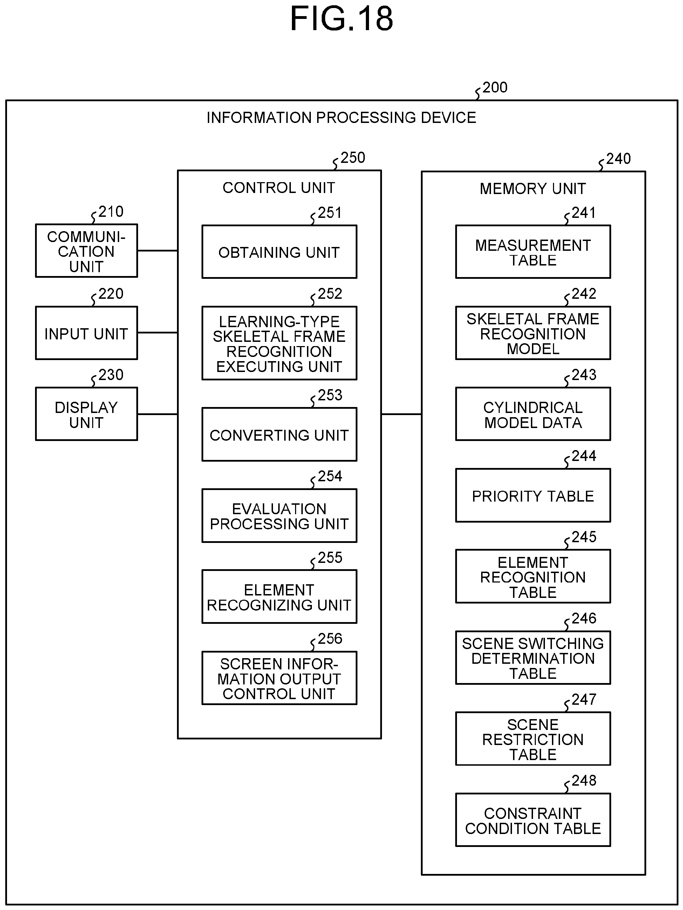

Given below is the explanation of a configuration of the information processing device according to the second embodiment. FIG. 18 is a functional block diagram illustrating a configuration of the information processing device according to the second embodiment. As illustrated in FIG. 18, an information processing device 200 includes a communication unit 210, an input unit 220, a display unit 230, a memory unit 240, and a control unit 250.

The communication unit 210 is a processing unit that receives range image data from the sensors 10. Then, the communication unit 210 outputs the received range image data to the control unit 250. The communication unit 210 represents an example of a communication device. Moreover, the communication unit 210 can receive data also from other external devices (not illustrated).

The input unit 220 is an input device that inputs a variety of information to the control unit 250 of the information processing device 200. The input unit 220 corresponds to a keyboard, a mouse, or a touch-sensitive panel. The user operates the input unit 220, and issues a request for displaying screen information and performs screen operations. Moreover, the user can operate the input unit 220 and input the data of the event presented by the photographic subject 1 to the control unit 250.

The display unit 230 is a display device that displays the information output from the control unit 250. For example, the display unit 230 displays screen information indicating the element certification and the scoring result of various contests. The display unit 230 corresponds to a liquid crystal display, an organic EL display, or a touch-sensitive panel.

The memory unit 240 includes a measurement table 241, a skeletal frame recognition model 242, cylindrical model data 243, a priority table 244, an element recognition table 245, a scene switching determination table 246, a scene restriction table 247, and a constraint condition table 248. The memory unit 240 corresponds to a semiconductor memory device such as a RAM or a flash memory; or a memory device such as an HDD.

The measurement table 241 is a table for storing range image data measured by the sensors 10. The explanation of the measurement table 241 is identical to the explanation of the measurement table 141 according to the first embodiment.

The skeletal frame recognition model 242 represents a set of parameters of the skeletal frame recognition model that is learnt in advance based on the learning data. The explanation of the skeletal frame recognition model 242 is identical to the explanation of the skeletal frame recognition model 142 according to the first embodiment.

The cylindrical model data 243 represents the data of a model in which the body regions of the human body representing the photographic subject 1 are expressed as cylindrical forms (or elliptical forms). The cylindrical forms are connected by the regions corresponding to the joints of the photographic subject 1. The explanation of the cylindrical model data 243 is identical to the explanation of the cylindrical model data 143 according to the first embodiment.

The priority table 244 is a table in which, after the fitting is performed using each of the first-type initial value set, the second-type initial value set, and the third-type initial value set, the fitting result that is to be given priority is defined. The explanation of the priority table 244 is identical to the explanation of the priority table 144 according to the first embodiment.

The element recognition table 245 is a table in which the time-series variation of each joint position included in the skeletal frame recognition result is held in a corresponding manner to the types of elements. Moreover, in the element recognition table 245, the combinations of the types of elements are held in a corresponding manner to scores. The explanation of the element recognition table 245 is identical to the explanation of the element recognition table 145 according to the first embodiment.

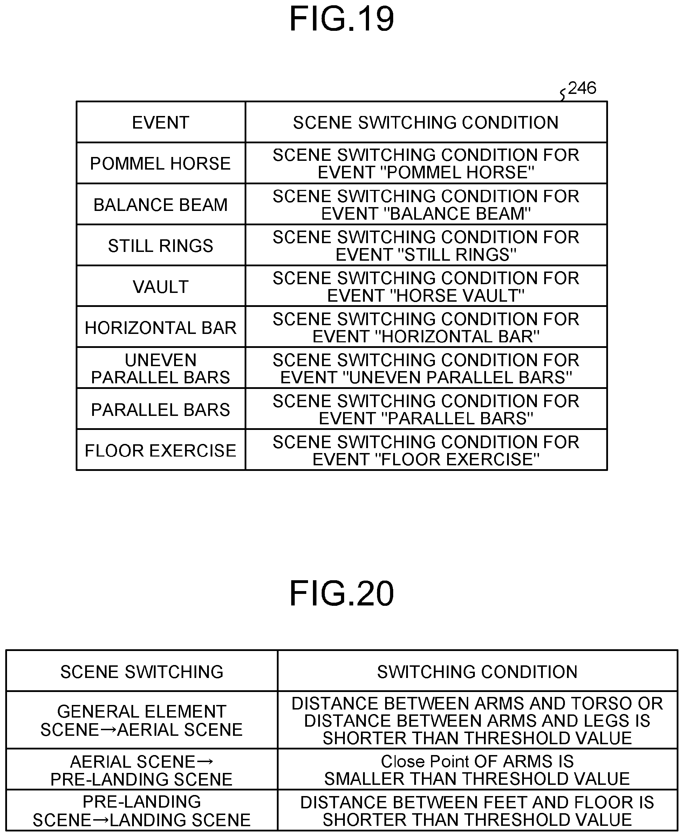

The scene switching determination table 246 is a table for determining the switching of the scenes according to an event. FIG. 19 is a diagram illustrating an exemplary data structure of the scene switching determination table. As illustrated in FIG. 19, in the scene switching determination table 246, the events are held in a corresponding manner to the scene switching conditions. Herein, an event indicates the event of the act. A scene switching condition defines the condition according to which there is switching of the scene. For example, according to the distance between predetermined body regions of the photographic subject or according to the magnitude of the Close Point, the scene gets switched. Meanwhile, although the initial scene is a general element scene, it can be changed according to the movement of the person. Moreover, depending on the event, the general element scene can be a general element scene (symmetric) or a general element scene (asymmetric).

As an example, the explanation is given about the scene switching conditions regarding the event " vault". FIG. 20 is a diagram illustrating the scene switching conditions regarding the event " vault". As illustrated in FIG. 20, in the event " vault", the following switching conditions are included: the switching condition for switching from the "general element scene" to the "aerial scene"; the switching condition for switching from the "aerial scene" to the "pre-landing scene"; and the switching condition for switching from the "pre-landing scene" to the "landing scene".

The switching condition for switching from the "general element scene" to the "aerial scene" is the condition indicating that the distance between the arms and the torso or the distance between the arms and the legs is shorter than a threshold value. The switching condition for switching from the "aerial scene" to the "pre-landing scene" is the condition indicating that the Close point of the arms is smaller than a threshold value. The switching condition for switching from the "pre-landing scene" to the "landing scene" is the condition indicating that the distance between the feet and the floor is shorter than a threshold value.

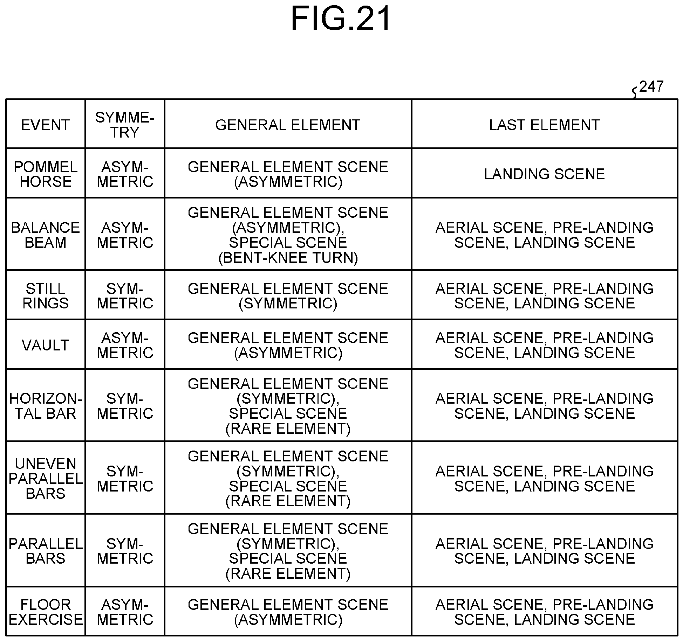

The scene restriction table 247 is a table used in the case of restricting the scenes according to an event. FIG. 21 is a diagram illustrating an exemplary data structure of the scene restriction table. As illustrated in FIG. 21, the scene restriction table 247 includes the following items: event, symmetry, general element, and last element. The item "event" indicates the event of the act. The item "symmetry" indicates whether the left-side joint angles and the right-side joint angles of the photographic subject 1 are "symmetric" or "asymmetric".

In each event, a general element includes at least either one of a general element scene (asymmetric), a general element scene (symmetric), and a special scene. A general element scene (asymmetric) indicates a general element in which the left-side joint angles and the right-side joint angles of the photographic subject 1 are asymmetric. A general element scene (symmetric) indicates a general element in which the left-side joint angles and the right-side joint angles of the photographic subject 1 are symmetric. A special scene includes the bent-knee turn or a rare element.

In each event, the last element includes at least either one of an aerial scene, a pre-landing scene, and a landing scene.

As illustrated in FIG. 21, due to the event and the symmetry, the general element scenes and the last element scenes are narrowed down.

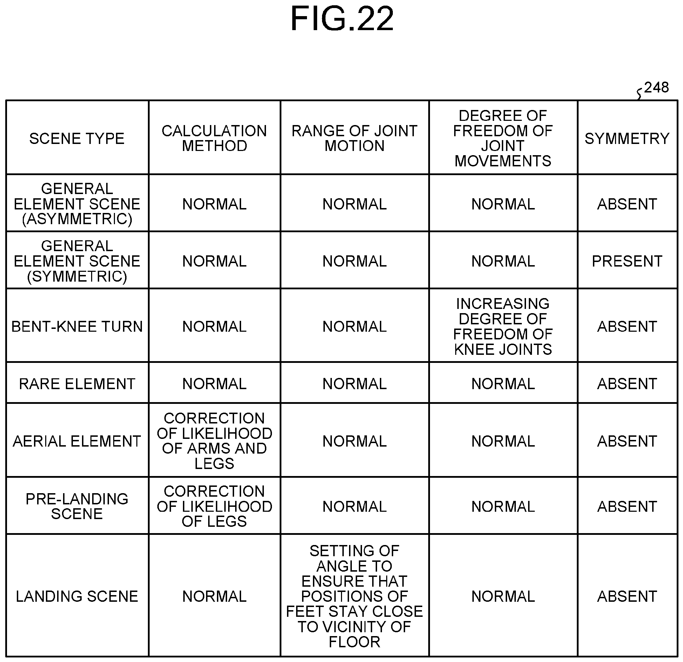

The constraint condition table 248 is a table in which the method for calculating the value of the evaluation function according to the scene is defined, and in which the constraint condition is defined. FIG. 22 is a diagram illustrating an exemplary data structure of the constraint condition table. As illustrated in FIG. 22, the constraint condition table 248 includes the following items: scene type, calculation method, range of joint motion, degree of freedom of joint movements and symmetry. The item "scene type" indicates the type of the concerned scene.

The item "calculation method" indicates the method for calculating the evaluation function. When the item "calculation method" is set to "normal", it is indicated that the value is calculated using the evaluation function Q, which is given earlier in Equation (4), without any modification. When the item "calculation method" is "correct the evaluation function for the arms and the legs", correction is performed so as to increase the value of the evaluation function Q in proportion to the variation between the joint angles of the arms and the legs corresponding to the frame number n-1 and the joint angles of the arms and the legs corresponding to the frame number n. When the calculation method is "correct the evaluation function for the legs", correction is performed so as to increase the value of the evaluation function Q in proportion to the variation between the joint angles of the legs corresponding to the frame number n-1 and the joint angles of the legs corresponding to the frame number n.

The item "range of joint motion" indicates the range of motion of the joints of the skeletal frame. When the item "range of joint motion" is set to "normal", the range of motion of the joints of the skeletal frame is set to be the range of joint motion of a human body without any constraints. When the item "range of joint motion" is set to be other than "normal", the range defined in the item "range of joint motion" is followed. For example, the range of joint motion corresponding to the scene type "landing scene" is set to "set the angle to ensure that the positions of the ankles stay close to the vicinity of the floor".

The item "degree of freedom of joint movements" indicates the degree of freedom of the joint angles. When the item "degree of freedom of joint movements" is set to "normal", the degree of freedom of each joint is based on the range of joint motion of a human body during general movements. When the item "degree of freedom of joint movements" is set to be other than "normal", the degree of freedom defined in the item "degree of freedom of joint movements" is followed. For example, the degree of freedom of the joint movements corresponding to a scene type "bent-knee turn" results in an increase the degree of freedom of the knees.

The item "symmetry" represents information that, in the case of varying the joint angles of the cylindrical model data 243 during the fitting, indicates whether or not to maintain symmetry between the left-side joint angles and the right-side joint angles. With reference to the cylindrical model data illustrated in FIG. 4, symmetry is maintained between the following sets of body regions: the set of the cylindrical forms Md4 and Md5 and the cylindrical forms Md6 and Md7; and the set of the cylindrical forms Md8, Md9, and Md13 and the cylindrical forms Md10, Md11, and Md14.

The "normal model" explained with reference to FIG. 17 is equivalent to the fitting performed based on the items "calculation method", "range of joint motion", "degree of freedom of joint movements", and "symmetry" corresponding to the item "scene type" indicating "general element scene (asymmetric)" in the constraint condition table 248. Moreover, the "aerial model" is equivalent to the fitting performed based on the items "calculation method", "range of joint motion", "degree of freedom of joint movements", and "symmetry" corresponding to the item "scene type" indicating "aerial scene" in the constraint condition table 248.

Furthermore, the "pre-landing model" is equivalent to the fitting performed based on the items "calculation method", "range of joint motion", "degree of freedom of joint movements", and "symmetry" corresponding to the item "scene type" indicating "pre-landing scene" in the constraint condition table 248. Moreover, the "landing model" is equivalent to the fitting performed based on the items "calculation method", "range of joint motion", "degree of freedom of joint movements", and "symmetry" corresponding to the item "scene type" indicating "landing scene" in the constraint condition table 248.

Returning to the explanation with reference to FIG. 18, the control unit 250 includes an obtaining unit 251, a learning-type skeletal frame recognition executing unit 252, a converting unit 253, an evaluation processing unit 254, an element recognizing unit 255, and a screen information output control unit 256. The control unit 250 is implemented using a CPU, or a GPU, or hardwired logic such as an ASIC or an FPGA.

The obtaining unit 251 is a processing unit that obtains the range image data from the sensors 10. The explanation of the obtaining unit 251 is identical to the explanation of the obtaining unit 151 according to the first embodiment. The obtaining unit 251 sequentially outputs the point group frame corresponding to each frame number to the evaluation processing unit 254.

The learning-type skeletal frame recognition executing unit 252 is a processing unit that executes a skeletal frame recognition model based on the skeletal frame recognition model 242. The explanation of the learning-type skeletal frame recognition executing unit 252 is identical to the explanation of the learning-type skeletal frame recognition executing unit 152 according to the first embodiment. The learning-type skeletal frame recognition executing unit 252 outputs the joint coordinate data to the converting unit 253.

The converting unit 253 is a processing unit that converts the joint coordinate data into joint angles. The explanation of the converting unit 253 is identical to the explanation of the converting unit 153 according to the first embodiment. The converting unit 253 outputs the joint angle data to the evaluation processing unit 254.

The evaluation processing unit 254 is a processing unit that performs the three types of fitting using the respective three initial value sets, and evaluates the fitting results. Then, the evaluation processing unit 254 outputs the most probable fitting result as the final-version skeletal frame recognition result to the element recognizing unit 255.

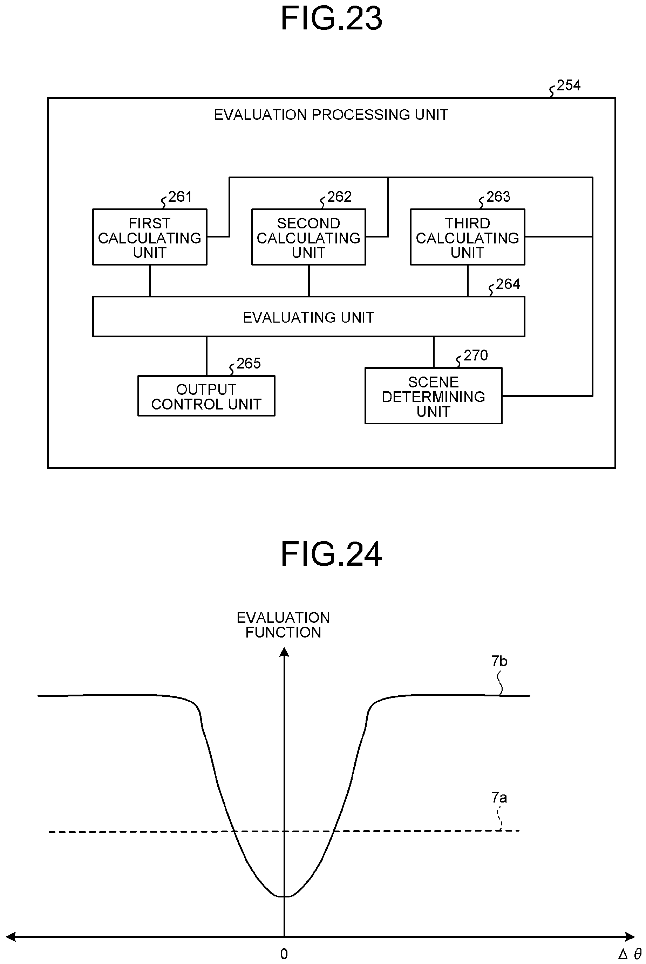

FIG. 23 is a functional block diagram illustrating a configuration of the evaluation processing unit according to the second embodiment. As illustrated in FIG. 23, the evaluation processing unit 254 includes a first calculating unit 261, a second calculating unit 262, a third calculating unit 263, an evaluating unit 264, an output control unit 265, and a scene determining unit 270.

The first calculating unit 261 is a processing unit that performs the first-type fitting by treating the first-type initial value set as the initial state of the cylindrical model data 243. In the case of performing the first-type fitting, according to the scene type obtained from the scene determining unit 270, the first calculating unit 261 varies the constraint condition and the method for calculating the value of the evaluation function. Then, the first calculating unit 261 outputs the result of the first-type processing to the evaluating unit 264.

The first calculating unit 261 compares the scene type and the constraint condition table 248, and accordingly varies the constraint condition and the method for calculating the value of the evaluation function.

When the scene type is set to the "general element scene (asymmetric)", the first calculating unit 261 performs the first-type fitting in an identical manner to the first calculating unit 161 according to the first embodiment.

When the scene type is set to the "general element scene (symmetric)", the first calculating unit 261 performs the first-type fitting essentially in an identical manner to the first calculating unit 161 according to the first embodiment. However, the first calculating unit 261 performs the first-type fitting under the constraint condition indicating that the joint angles of the left-side cylindrical forms Md4 and Md5 have symmetry with the joint angles of the right-side cylindrical forms Md6 and Md7 of the photographic subject 1. Also regarding the set of the left-side cylindrical forms Md8, Md9, and Md13 and the right-side cylindrical forms Md10, Md11, and Md14; the first calculating unit 261 performs the first-type fitting under the constraint condition indicating that the relationship of each joint angle has symmetry.

When the scene type is set to the "bent-knee turn", the first calculating unit 261 performs the first-type fitting essentially in an identical manner to the first calculating unit 161 according to the first embodiment. However, the first calculating unit 261 updates the joint angles after increasing the degree of freedom of the joint angles corresponding to the knee joints, and then performs the first-type fitting. For example, when the normal degree of freedom is equal to "1", it is changed to "2".

When the scene type is set to the "rare element", the first calculating unit 261 performs the first-type fitting in an identical manner to the first calculating unit 161 according to the first embodiment.

When the scene type is set to the "aerial turn", the first calculating unit 261 performs the first-type fitting essentially in an identical manner to the first calculating unit 161 according to the first embodiment. However, the first calculating unit 261 performs correction so as to increase the value of the evaluation function Q in proportion to the variation between the joint angles of the arms and legs corresponding to the frame number n-1 and the joint angles of the arms and legs corresponding to the frame number n.

For example, in the case of calculating the value of the evaluation function given earlier in Equation (4), the first calculating unit 261 applies a coefficient to an item "$p_{nm}\varepsilon_m$" related to the arms (the cylindrical forms Md4, Md5, Md7, and Md6) and the legs (the cylindrical forms Md8, Md9, Md10, and Md11); and performs correction so as to increase the value of the evaluation function Q. Herein, the coefficient is an additional item meant for increasing the value in proportion to the variation in the joint angles of the arms and the legs corresponding to the frame number n.

FIG. 24 is a diagram illustrating the relationship between the variation and the value of the evaluation function. In FIG. 24, the horizontal axis represents the variation $\Delta\theta$, and the vertical axis represents the value of the evaluation function. Herein, smaller the value of the evaluation function, the more probable is the fitting result. In FIG. 24, a line 7a represents the values of the evaluation function Q when no correction is performed. Moreover, a line 7b represents the values of the evaluation function Q when correction is performed according to the variation.

For example, in an aerial scene, the arms and the legs of the photographic subject 1 tend to be immobilized (be difficult to move). Hence, if the value of the evaluation function is increased in proportion to the variation between the joint angles of the arms and the legs corresponding to the frame number n-1 and the joint angles of the arms and the legs corresponding to the frame number n, then the fitting result can be appropriately brought closer to the actual movements of a person.

When the scene type is set to the "pre-landing scene", the first calculating unit 261 performs the first-type fitting essentially in an identical manner to the first calculating unit 161 according to the first embodiment. However, the first calculating unit 261 performs correction so as to increase the value of the evaluation function Q in proportion to the variation between the joint angles of the legs corresponding to the frame number n-1 and the joint angles of the legs corresponding to the frame number n.

For example, in the pre-landing scene, the arms of the photographic subject 1 tend to move easily but the legs tend to be difficult to move. Hence, if the value of the evaluation function is increased in proportion to the variation between the joint angles of the legs corresponding to the frame number n-1 and the joint angles of the legs corresponding to the frame number n, then the fitting result can be appropriately brought closer to the actual movements of a person.

For example, in the case of calculating the value of the evaluation function given earlier in Equation (4), the first calculating unit 261 applies a coefficient to the item "$p_{nm}\varepsilon_m$" related to the legs (the cylindrical forms Md8, Md9, Md10, and Md11); and performs correction so as to increase the value of the evaluation function Q. Herein, the coefficient is an additional item meant for increasing the value in proportion to the variation in the joint angles of the legs corresponding to the frame number n.

When the scene type is set to the "landing scene", the first calculating unit 261 performs the first-type fitting essentially in an identical manner to the first calculating unit 161 according to the first embodiment. However, the first calculating unit 261 performs the fitting by restricting the range of joint motion in such a way that the positions of the ankles stay close to the vicinity of the floor.

For example, in the landing scene, the arms and the legs are easy to move and the feet are difficult to move away from the vicinity of the floor. Hence, if the range of joint motion is so restricted that the positions of the ankles stay close to the vicinity of the floor, then the skeletal frame recognition result can be appropriately brought closer to the actual movements of a person.

The second calculating unit 262 is a processing unit that performs the second-type fitting by treating the second-type initial value set as the initial state of the cylindrical model data 243. Other than the fact that the initial value is different, the second-type fitting performed by the second calculating unit 262 is identical to the first-type fitting performed by the first calculating unit 261. Then, the second calculating unit 262 outputs the result of the second-type processing to the evaluating unit 264.

The third calculating unit 263 is a processing unit that performs the third-type fitting by treating the third-type initial value set as the initial state of the cylindrical model data 243. Other than the fact that the initial value is different, the third-type fitting performed by the third calculating unit 263 is identical to the first-type fitting performed by the first calculating unit 261. Then, the third calculating unit 263 outputs the result of the third-type processing to the evaluating unit 264.

Based on the likelihoods of the results of the first-type processing to the third-type processing, the evaluating unit 264 evaluates the results of the first-type processing to the third-type processing and identifies, from among the results of the first-type processing to the third-type processing, the result to be treated as the final-version skeletal frame recognition result data. The evaluating unit 264 performs the abovementioned operation for each frame number. Then, the evaluating unit 164 outputs the sets of skeletal frame recognition result data, which are identified on a frame-by-frame basis, to the first calculating unit 261, the second calculating unit 262, the output control unit 165, and the scene determining unit 270.

Regarding the evaluating unit 264, the other explanation is identical to the explanation of the evaluating unit 164 according to the first embodiment.

The output control unit 265 is a processing unit that sequentially receives the final-version skeletal frame recognition result data corresponding to each frame number, and outputs the received final-version skeletal frame recognition result data to the element recognizing unit 255. In the following explanation, the received final-version skeletal frame recognition result data that is output to the element recognizing unit 255 is simply referred to as the skeletal frame recognition result data.

The scene determining unit 270 is a processing unit that determines the scene type based on the skeletal frame recognition result data obtained from the evaluating unit 264; the scene switching determination table 246; and the scene restriction table 247. Then, the scene determining unit 270 outputs the information of the identified scene type to the first calculating unit 261, the second calculating unit 262, and the third calculating unit 263. For example, based on the determination result about the scene type corresponding to the frame number n, each of the first calculating unit 261, the second calculating unit 262, and the third calculating unit 263 performs the fitting with respect to the point group frame corresponding to the frame number n+1.

It is assumed that the scene determining unit 270 obtains, in advance from the input unit 220, the data of the event of the act of the photographic subject 1. Then, the scene determining unit 270 compares the event of the act of the photographic subject 1 with the scene switching determination table 246, and identifies the scene switching condition. Meanwhile, the initial scene type is assumed to be a general element scene. Thus, the scene determining unit 270 compares the event of the act of the photographic subject 1 with the scene restriction table 247, and determines whether the general element scene is a general element scene (asymmetric) or a general element scene (symmetric).

The scene determining unit 270 identifies the body regions of the photographic subject 1 based on the skeletal frame recognition result data; compares them with the scene switching condition; and determines the scene type.

Moreover, the scene determining unit 270 calculates the Close Point and determines the scene type.

The operations performed by the scene determining unit 270 are explained below with reference to FIG. 20. Herein, the initial scene type is assumed to be a general element scene. The scene determining unit 270 sequentially receives the skeletal frame recognition result data; and, when the distance between the arms and the torso or the distance between the arms and the legs becomes shorter than a threshold value, determines the scene type to be the "aerial scene".

Moreover, the scene determining unit 270 sequentially receives the skeletal frame recognition result data and, when the Close Point of the arms becomes smaller than the threshold value, determines the scene type to be the "pre-landing scene". Furthermore, the scene determining unit 270 sequentially receives the skeletal frame recognition result data and, when the distance between the feet and the floor becomes shorter than the threshold value, determines the scene type to be the "landing scene". It is assumed that the threshold values and the position of the floor are set in advance in the scene determining unit 270.

Meanwhile, at a certain point of time, if the scene type is determined to the "general element scene" and if the skeletal frame recognition result data satisfies a predetermined condition, then the scene determining unit 270 determines the scene type to be the "special scene".

If the special scene is determined to have occurred, the scene determining unit 270 compares the event of the act of the photographic subject 1 with the scene restriction table 247, and determines the specific scene type of the special scene. For example, in the case of the event "balance beam", the scene type is the "bent-knee turn".

Returning to the explanation with reference to FIG. 18, the element recognizing unit 255 sequentially obtains the skeletal frame recognition result data in order of frame numbers from the evaluation processing unit 254, and identifies the time-series variation of the joint coordinates based on the successive sets of skeletal frame recognition result data. Then, the element recognizing unit 255 compares the time-series variation of each joint position with the element recognition table 245, and identifies the types of elements. Moreover, the element recognizing unit 255 compares the combinations of the types of elements with the element recognition table 245, and calculates the score of the act of the photographic subject 1.

The element recognizing unit 255 outputs the following information to the screen information output control unit 256: the types of elements included in the act, the score of the act, and the skeletal frame recognition result data from the start to the end of the act.

The screen information output control unit 256 generates screen information based on the score of the act and based on the skeletal frame recognition result data from the start to the end of the act. Then, the screen information output control unit 256 outputs the generated screen information to the display unit 230 for display purposes. The screen information generated by the screen information output control unit 256 is identical to the screen information generated by the screen information output control unit 156 according to the first embodiment.

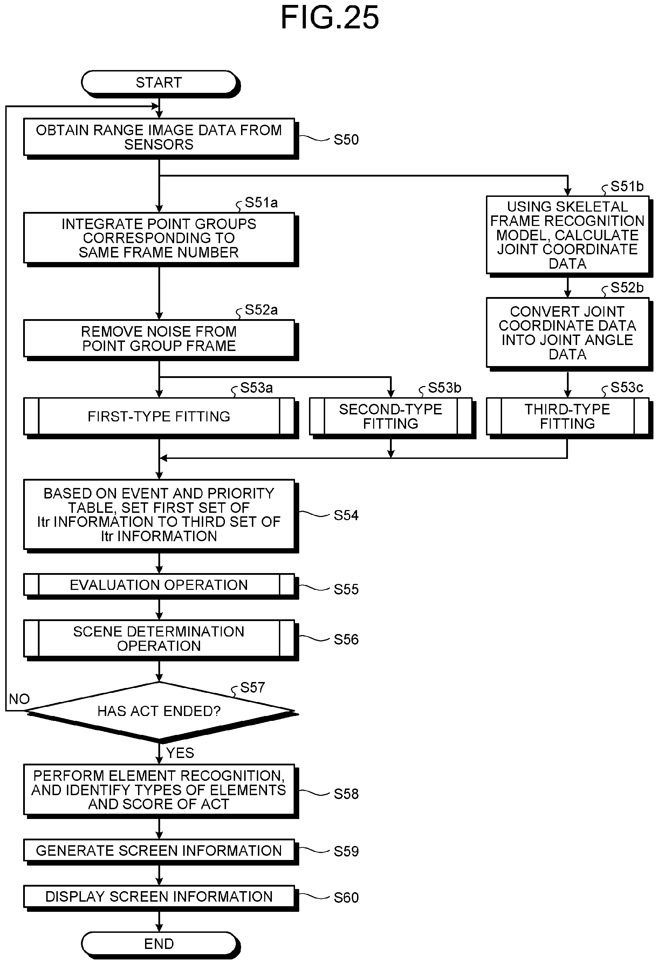

Given below is the explanation about an exemplary sequence of operations performed in the information processing device 200 according to the second embodiment. FIG. 25 is a flowchart for explaining the sequence of operations performed in the information processing device according to the second embodiment. As illustrated in FIG. 25, in the information processing device 100, the obtaining unit 251 obtains the range image data from the sensors 10 (Step S50).

The obtaining unit 251 integrates the point frames corresponding to the same frame number (Step S51a). Then, the obtaining unit 251 eliminates noise from the point group frame (Step S52a). Moreover, in the information processing device 200, the learning-type skeletal frame recognition executing unit 252 calculates the joint coordinate data using the skeletal frame recognition model (Step S51b). Furthermore, in the information processing device 200, the converting unit 253 converts the joint coordinate data into the joint angle data (Step S52b).

Then, in the information processing device 200, the evaluation processing unit 254 performs the first-type fitting, the second-type fitting, and the third-type fitting in parallel (Steps S53a, S53b, and S53c). Based on the event and the priority table 244, the evaluation processing unit 254 sets the first set of Itr information to the third set of Itr information (Step S54).

Then, the evaluation processing unit 254 performs the evaluation operation (Step S55). Moreover, the evaluation processing unit 254 performs the scene determination operation (Step S56). In the information processing device 200, if the act of the photographic subject 1 has not ended (No at Step S57), then the system control returns to Step S50. On the other hand, in the information processing device 200, if the act of the photographic subject 1 has ended (Yes at Step S57), then the system control proceeds to Step S58.

In the information processing device 200, the element recognizing unit 255 performs element recognition and identifies the types of elements and the score of the act (Step S58). Then, in the information processing device 200, the screen information output control unit 256 generates screen information based on the recognition result (Step S59). The screen information output control unit 256 displays the screen information in the display unit 230 (Step S60).

Regarding the fitting performed at Step S53 illustrated in FIG. 25, other than the fact that the constraint condition is set according to the scene type and the fact that the method for calculating the evaluation function is implemented, the fitting is identical to the fitting performed according to the first embodiment as illustrated in FIG. 15.

The evaluation operation performed at Step S55 illustrated in FIG. 25 is identical to the evaluation operation according to the first embodiment as illustrated in FIG. 16.

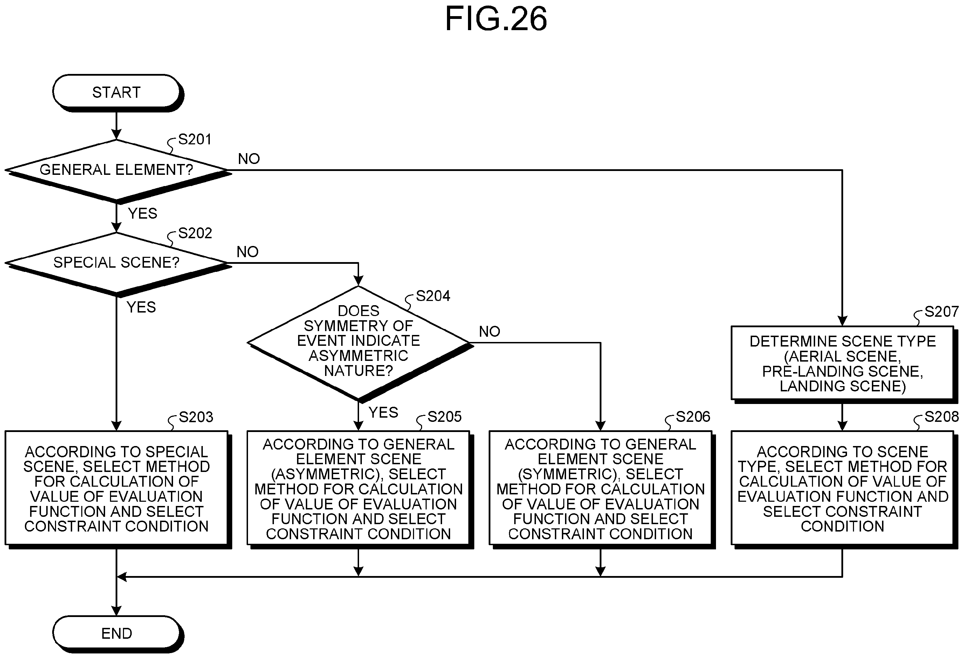

Given below is the explanation of an exemplary sequence of operations performed in the scene determination operation performed at Step S56 illustrated in FIG. 25. FIG. 26 is a flowchart for explaining the sequence of operations performed in the scene determination operation. As illustrated in FIG. 26, in the information processing device 200, the scene determining unit 270 identifies whether or not the concerned element is a general element (Step S201). If the concerned element is a general element (Yes at Step S201), then the system control proceeds to Step S202. On the other hand, if the concerned element is not a general element (No at Step S201), then the system control proceeds to Step S207.

The scene determining unit 270 determines whether or not the scene is a special scene (Step S202). If the scene determining unit 270 determines that the scene is a special scene (Yes at Step S202), then each calculating unit selects the method for calculating the evaluation function and selects the constraint condition according to the special scene (Step S203). Herein, the calculating units correspond to the first calculating unit 261, the second calculating unit 262, and the third calculating unit 263.

On the other hand, if the scene determining unit 270 determines that the scene is not a special scene (Yes at Step S202), then the system control proceeds to Step S204. The scene determining unit 270 determines whether or not the symmetry of the event indicates the asymmetric nature (Step S204). If the scene determining unit 270 determines that the scene is a general element scene (asymmetric) (Yes at Step S204), then each calculating unit selects the method for calculating the evaluation function and selects the constraint condition according to the general element scene (asymmetric) (Step S205).

On the other hand, if the scene determining unit 270 determines that the scene is not a general element scene (asymmetric) (No at Step S204), then each calculating unit selects the method for calculating the evaluation function and selects the constraint condition according to the general element scene (symmetric) (Step S206).

The scene determining unit 270 determines the scene type based on the scene switching condition corresponding to the event, and based on the skeletal frame recognition result (Step S207). The scene types include the aerial scene, the pre-landing scene, and the landing scene. Each calculating unit selects the method for calculating the evaluation function and selects the constraint condition according to the scene type (Step S208).

Given below is the explanation of the effects achieved in the information processing device 200 according to the second embodiment. In the information processing device 200 according to the second embodiment, the scene type of the act of the photographic subject is identified and, depending on the identified scene type, the constraint condition with respect to the fitting is varied and the method for calculating the evaluation function is varied. As a result, it becomes possible to perform the most suitable fitting according to the scene type, and to enhance the accuracy of the skeletal frame recognition result. Moreover, since the probability of the fitting can be corrected, it also becomes possible to select the most suitable skeletal frame recognition result.

Meanwhile, the operations performed in the information processing device 100 according to the first embodiment and the information processing device 200 according to the second embodiment can be applied for various competitive sports involving scoring. Other than a gymnastics act, the competitive sports involving scoring include trampoline, swimming diving, figure skating, kata in Karate, social dancing, snowboarding, skateboarding, aerial skiing, and surfing. Moreover, the operations can also be applied in checking the body form in classical ballet, ski jumping, air turn in mogul skiing, baseball, or basketball. Furthermore, the operations can also be applied to competitive sports such as kendo, judo, wrestling, and sumo. Moreover, the operations can also be used in evaluating whether or not the barbell is lifted in weightlifting.

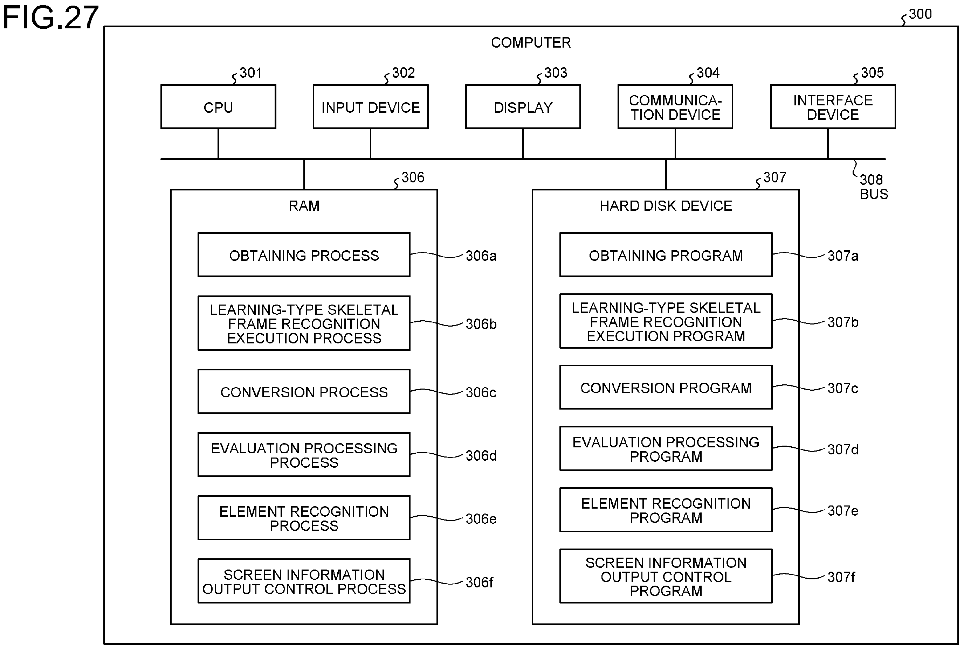

Given below is the explanation of an exemplary hardware configuration of a computer that implements the functions identical to the information processing device 100 (200) according to the embodiments. FIG. 27 is a diagram illustrating an exemplary hardware configuration of a computer that implements the functions identical to the information processing device.

As illustrated in FIG. 27, a computer 300 includes a CPU 301 that performs various arithmetic operations; an input device 302 that receives input of data from the user; and a display 303. Moreover, the computer 300 includes a communication device 304 that receives the range image data from the sensors 10; and an interface device 305 that establishes connection with various devices. Furthermore, the computer 300 includes a RAM 306 that is used to temporarily store a variety of information; and a hard disk device 307. The devices 301 to 307 are connected to each other by a bus 308.

The hard disk device 307 is used to store an obtaining program 307a, a learning-type skeletal frame recognition execution program 307b, a conversion program 307c, an evaluation processing program 307d, an element recognition program 307e, and a screen information output control program 307f. The CPU 301 reads the obtaining program 307a, the learning-type skeletal frame recognition execution program 307b, the conversion program 307c, the evaluation processing program 307d, the element recognition program 307e, and the screen information output control program 307f; and loads them in the RAM 306.

The obtaining program 307a functions as an obtaining process 306a. The learning-type skeletal frame recognition execution program 307b functions as a learning-type skeletal frame recognition execution process 306b. The conversion program 307c functions as a conversion process 306c. The evaluation processing program 307d functions as an evaluation processing process 306d. The element recognition program 307e functions as an element recognition process 306e. The screen information output control program 307f functions as a screen information output control process 306f.

The operations of the obtaining process 306a correspond to the operations of the obtaining unit 151 or the obtaining unit 251. The operations of the learning-type skeletal frame recognition execution process 306b correspond to the operations of the learning-type skeletal frame recognition executing unit 152 or the learning-type skeletal frame recognition executing unit 252. The operations of the conversion process 306c correspond to the operations of the converting unit 153 or the converting unit 253. The operations of the evaluation processing process 306 correspond to the operations of the evaluation processing unit 154 or the evaluation processing unit 254. The operations of the element recognition process 306e correspond to the operations of the element recognizing unit 155 or the element recognizing unit 255. The operations of the screen information output control process 306f correspond to the operations of the screen information output control unit 156 or the screen information output control unit 206.

Meanwhile, the programs 307a to 307f need not always be stored in the hard disk device 307 from the beginning. Alternatively, for example, the programs can be stored in a "portable physical medium" such as a flexible disk (FD), a CD-ROM, a DVD, a magneto-optical disk, or an IC card that is insertable in the computer 300. Then, the computer 300 can read the programs 307a to 307f and execute them.

Reference Signs List

10a, 10b sensor
100 information processing device
110, 210 communication unit
120, 220 input unit
130, 230 display unit
140, 240 memory unit
141, 241 measurement table
142, 242 skeletal frame recognition model
143, 243 cylindrical model data
144, 244 priority table
145, 245 element recognition table
150, 250 control unit
151, 251 obtaining unit
152, 252 learning-type skeletal frame recognition executing unit
153, 253 converting unit
154, 254 evaluation processing unit
155, 255 element recognizing unit
156, 256 screen information output control unit
161 first calculating unit
162 second calculating unit
163 third calculating unit
164 evaluating unit
165 output control unit
246 scene switching determination table
247 scene restriction table
248 constraint condition table

**Claims**

1. An evaluation method implemented in a computer, comprising:

   obtaining point group data of a photographic subject based on measurement data of a sensor that detects distance to the photographic subject;

obtaining a three-dimensional model corresponding to the photographic subject;
at time of applying the three-dimensional model to the point group data, performing

first-type processing for applying, to the point group data, the three-dimensional model in which result of previous application operation is set as initial value set,
second-type processing for applying, to the point group data, the three-dimensional model in which value measured based on variation due to period of time from previous application operation to current application operation is set as initial value set, and
third-type processing for applying, to the point group data, the three-dimensional model in which value calculated based on result of inputting the measurement data to a skeletal frame recognition model is set as initial value set;

evaluating result of the first-type processing, result of the second-type processing, and result of the third-type processing based on likelihood of result of the first-type processing, likelihood of result of the second-type processing, and likelihood of result of the third-type processing; and
outputting, as skeletal frame recognition result of the photographic subject, either result of the first-type processing, or result of the second-type processing, or result of the third-type processing based on evaluation result.

2. The evaluation method according to claim 1, wherein the first-type processing, the second-type processing, and the third-type processing is performed in parallel.

3. The evaluation method according to claim 2, wherein the evaluating includes evaluating result of the first-type processing, result of the second-type processing, and result of the third-type processing further based on restriction related to movements of human body.

4. The evaluation method according to claim 3, wherein the evaluating includes

performing initial setting of result of the first-type processing as output candidate,
setting, when value obtained by subtracting likelihood of the output candidate from likelihood of result of the second-type processing is equal to or greater than a threshold value, result of the second-type processing as the output candidate, and
setting, when value obtained by subtracting likelihood of the output candidate from likelihood of result of the third-type processing is equal to or greater than a threshold value, result of the third-type processing as the output candidate.

5. The evaluation method according to claim 4, wherein the operation of evaluating includes

setting, when difference between result set as the output candidate and result of the second-type processing is within a predetermined range and when likelihood of the output candidate is smaller than likelihood of result of the second-type processing, result of the second-type processing as the output candidate, and
setting, when difference between result set as the output candidate and result of the third-type processing is within a predetermined range and when likelihood of the output candidate is smaller than likelihood of result of the third-type processing, result of the third-type processing as the output candidate.

6. The evaluation method according to any one of claims 1 to 5, wherein

in the three-dimensional model, a plurality of cylindrical forms corresponding to body regions of a human body is connected by joint portions, and
the first-type processing, the second-type processing, and the third-type processing includes

varying joint angles of the three-dimensional model, and
calculating value of an evaluation function, which evaluates fitting state with the point group data, in a repeated manner until value of the evaluation function satisfies a predetermined condition.

7. The evaluation method according to claim 6, wherein the first-type processing, the second-type processing, and the third-type processing includes restricting direction of varying the joint angles in movable directions of a human body.

8. The evaluation method according to claim 6, further comprising identifying, based on point group data of the photographic subject, a scene in a series of movements performed by the photographic subject, wherein the first-type processing, the second-type processing, and the third-type processing includes correcting value of the evaluation function based on the scene.

9. The evaluation method according to claim 8, wherein the first-type processing, the second-type processing, and the third-type processing includes

setting a constraint condition in case of varying the joint angles, and
varying the joint angles within a range in which the constraint condition is satisfied.

10. An evaluation program that causes a computer to execute:

obtaining point group data of a photographic subject based on measurement data of a sensor that detects distance to the photographic subject;
obtaining a three-dimensional model corresponding to the photographic subject;
at time of applying the three-dimensional model to the point group data, performing

first-type processing for applying, to the point group data, the three-dimensional model in which result of previous application operation is set as initial value set,
second-type processing for applying, to the point group data, the three-dimensional model in which value measured based on variation due to period of time from previous application operation to current application operation is set as initial value set, and
third-type processing for applying, to the point group data, the three-dimensional model in which value calculated based on result of inputting the measurement data to a skeletal frame recognition model is set as initial value set;

evaluating result of the first-type processing, result of the second-type processing, and result of the third-type processing based on likelihood of result of the first-type processing, likelihood of result of the second-type processing, and likelihood of result of the third-type processing; and
outputting, as skeletal frame recognition result of the photographic subject, either result of the first-type processing, or result of the second-type processing, or result of the third-type processing based on evaluation result.

11. The evaluation program according to claim 10, wherein the first-type processing, the second-type processing, and the third-type processing is performed in parallel.

12. The evaluation program according to claim 11, wherein the evaluating includes evaluating result of the first-type processing, result of the second-type processing, and result of the third-type processing further based on restriction related to movements of human body.

13. The evaluation program according to claim 12, wherein the evaluating includes

performing initial setting of result of the first-type processing as output candidate,
setting, when value obtained by subtracting likelihood of the output candidate from likelihood of result of the second-type processing is equal to or greater than a threshold value, result of the second-type processing as the output candidate, and
setting, when value obtained by subtracting likelihood of the output candidate from likelihood of result of the third-type processing is equal to or greater than a threshold value, result of the third-type processing as the output candidate.

14. The evaluation program according to claim 13, wherein the operation of evaluating includes

setting, when difference between result set as the output candidate and result of the second-type processing is within a predetermined range and when likelihood of the output candidate is smaller than likelihood of result of the second-type processing, result of the second-type processing as the output candidate, and
setting, when difference between result set as the output candidate and result of the third-type processing is within a predetermined range and when likelihood of the output candidate is smaller than likelihood of result of the third-type processing, result of the third-type processing as the output candidate.

**15.** The evaluation program according to any one of claims 10 to 14, wherein

in the three-dimensional model, a plurality of cylindrical forms corresponding to body regions of a human body is connected by joint portions, and
the first-type processing, the second-type processing, and the third-type processing includes

varying joint angles of the three-dimensional model, and
calculating value of an evaluation function, which evaluates fitting state with the point group data, in a repeated manner until value of the evaluation function satisfies a predetermined condition.

**16.** The evaluation program according to claim 15, wherein the first-type processing, the second-type processing, and the third-type processing includes restricting direction of varying the joint angles in movable directions of a human body.

**17.** The evaluation program according to claim 15, further causing the computer to execute identifying, based on point group data of the photographic subject, a scene in a series of movements performed by the photographic subject, wherein
the first-type processing, the second-type processing, and the third-type processing includes correcting value of the evaluation function based on the scene.

**18.** The evaluation program according to claim 17, wherein the first-type processing, the second-type processing, and the third-type processing includes

setting a constraint condition in case of varying the joint angles, and
varying the joint angles within a range in which the constraint condition is satisfied.

**19.** An information processing system comprising:

a sensor; and
an information processing device, wherein
the sensor outputs measurement data, which is obtained by detecting distance to a photographic subject, to the information processing device, and
the information processing device includes

an obtaining unit that obtains the measurement data and converts the measurement data into point group data,
a first calculating unit that

obtains a three-dimensional model corresponding to the photographic subject, and
at time of applying the three-dimensional model to the point group data, applies, to the point group data, the three-dimensional model in which result of previous application operation is set as initial value set,

a second calculating unit that

obtains a three-dimensional model corresponding to the photographic subject, and
applies, to the point group data, the three-dimensional model in which value measured based on variation due to period of time from previous application operation to current application operation is set as initial value set,

a third calculating unit that applies, to the point group data, the three-dimensional model in which value calculated based on result of inputting the measurement data to a skeletal frame recognition model is set as initial value set,
an evaluating unit that evaluates result of the first-type processing, result of the second-type processing, and result of the third-type processing based on likelihood of result of the first-type processing, likelihood of result of the second-type processing, and likelihood of result of the third-type processing, and
an output control unit that outputs, as skeletal frame recognition result of the photographic subject, either result of the first-type processing, or result of the second-type processing, or result of the third-type processing based on evaluation result.

20. The information processing system according to claim 19, wherein the first calculating unit, the second calculating unit, and the third calculating unit perform operations in parallel.

21. The information processing system according to claim 20, wherein the evaluating unit evaluates result of the first-type processing, result of the second-type processing, and result of the third-type processing further based on restriction related to movements of human body.

22. The information processing system according to claim 21, wherein the evaluating unit

performs initial setting of result of the first-type processing as output candidate,
sets, when value obtained by subtracting likelihood of the output candidate from likelihood of result of the second-type processing is equal to or greater than a threshold value, result of the second-type processing as the output candidate, and
sets, when value obtained by subtracting likelihood of the output candidate from likelihood of result of the third-type processing is equal to or greater than a threshold value, result of the third-type processing as the output candidate.

23. The information processing system according to claim 22, wherein the evaluating unit

sets, when difference between result set as the output candidate and result of the second-type processing is within a predetermined range and when likelihood of the output candidate is smaller than likelihood of result of the second-type processing, result of the second-type processing as the output candidate, and
sets, when difference between result set as the output candidate and result of the third-type processing is within a predetermined range and when likelihood of the output candidate is smaller than likelihood of result of the third-type processing, result of the third-type processing as the output candidate.

24. The information processing system according to any one of claims 19 to 23, wherein

in the three-dimensional model, a plurality of cylindrical forms corresponding to body regions of a human body is connected by joint portions, and
the first calculating unit, the second calculating unit, and the third calculating unit

vary joint angles of the three-dimensional model, and
calculate value of an evaluation function, which evaluates fitting state with the point group data, in a repeated manner until value of the evaluation function satisfies a predetermined condition.

25. The information processing system according to claim 24, wherein the first calculating unit, the second calculating unit, and the third calculating unit restrict direction of varying the joint angles in movable directions of a human body.

26. The information processing system according to claim 24, further comprising a scene determining unit that, based on point group data of the photographic subject, identifies a scene in a series of movements performed by the photographic subject, wherein
the first calculating unit, the second calculating unit, and the third calculating unit correct value of the evaluation function based on the scene.

27. The information processing system according to claim 26, wherein the first calculating unit, the second calculating unit, and the third calculating unit

set a constraint condition in case of varying the joint angles, and
vary the joint angles within a range in which the constraint condition is satisfied.

# FIG.1

# FIG.2

FIG.3

# FIG.4

Md3
Md12
Md7 Md6 Md4 Md5
Md2
Md1
Md10 Md8
Md11 Md9
Md14 Md13
143

# FIG.5

144

| EVENT | i=1 | i=2 | i=3 |
|---|---|---|---|
| POMMEL HORSE | FIRST-TYPE PROCESSING | SECOND-TYPE PROCESSING | THIRD-TYPE PROCESSING |
| BALANCE BEAM | FIRST-TYPE PROCESSING | SECOND-TYPE PROCESSING | THIRD-TYPE PROCESSING |
| STILL RINGS | SECOND-TYPE PROCESSING | FIRST-TYPE PROCESSING | THIRD-TYPE PROCESSING |
| VAULT | SECOND-TYPE PROCESSING | FIRST-TYPE PROCESSING | THIRD-TYPE PROCESSING |
| HORIZONTAL BAR | SECOND-TYPE PROCESSING | FIRST-TYPE PROCESSING | THIRD-TYPE PROCESSING |
| PARALLEL BARS | SECOND-TYPE PROCESSING | FIRST-TYPE PROCESSING | THIRD-TYPE PROCESSING |
| UNEVEN PARALLEL BARS | SECOND-TYPE PROCESSING | FIRST-TYPE PROCESSING | THIRD-TYPE PROCESSING |
| FLOOR EXERCISE | SECOND-TYPE PROCESSING | FIRST-TYPE PROCESSING | THIRD-TYPE PROCESSING |

# FIG.6

# FIG.7

$M_{n-1}$

$M_{1n}$

# FIG.8

# FIG.9

# FIG.10

# FIG.11

# FIG.12

Md5

D5

d≥Th

# FIG.13

EP 4 040 382 A1

# FIG.14

```
            ┌──────────────┐
            │    START     │
            └──────┬───────┘
                   │
   ┌───────────────▼────────────────┐
   │ OBTAIN RANGE IMAGE DATA FROM   │──── S10
   │           SENSORS              │
   └───┬────────────────────┬───────┘
       │                    │
       ▼ S11a               ▼ S11b
┌──────────────┐    ┌──────────────────┐
│ INTEGRATE    │    │ USING SKELETAL   │
│ POINT GROUPS │    │ FRAME RECOGNITION│
│ CORRESPONDING│    │ MODEL, CALCULATE │
│ TO SAME FRAME│    │ JOINT COORDINATE │
│ NUMBER       │    │ DATA             │
└──────┬───────┘    └────────┬─────────┘
       │ S12a               │ S12b
       ▼                    ▼
┌──────────────┐    ┌──────────────────┐
│ REMOVE NOISE │    │ CONVERT JOINT    │
│ FROM POINT   │    │ COORDINATE DATA  │
│ GROUP FRAME  │    │ INTO JOINT ANGLE │
│              │    │ DATA             │
└──────┬───────┘    └────────┬─────────┘
```

| S13a | S13b | S13c |
|------|------|------|
| FIRST-TYPE FITTING | SECOND-TYPE FITTING | THIRD-TYPE FITTING |

```
┌──────────────────────────────┐
│ BASED ON EVENT AND           │
│ PRIORITY TABLE, SET FIRST SET│──── S14
│ OF Itr INFORMATION TO THIRD  │
│ SET OF Itr INFORMATION       │
└──────────────┬───────────────┘
               ▼
┌──────────────────────────────┐
│     EVALUATION OPERATION     │──── S15
└──────────────┬───────────────┘
               ▼
          ╱─────────╲
  NO  ◄──╱   S16     ╲
        ╲ HAS ACT    ╱
         ╲ ENDED?   ╱
          ╲────┬───╱
               │ YES
               ▼
┌──────────────────────────────┐
│ PERFORM ELEMENT RECOGNITION, │
│ AND IDENTIFY TYPES OF        │──── S17
│ ELEMENTS AND SCORE OF ACT    │
└──────────────┬───────────────┘
               ▼
┌──────────────────────────────┐
│ GENERATE SCREEN INFORMATION  │──── S18
└──────────────┬───────────────┘
               ▼
┌──────────────────────────────┐
│  DISPLAY SCREEN INFORMATION  │──── S19
└──────────────┬───────────────┘
               ▼
         ┌──────────┐
         │   END    │
         └──────────┘
```

# FIG.15

START

OBTAIN POINT GROUP FRAME — S20

GENERATE INITIAL STATE OF CYLINDRICAL MODEL DATA — S21

CALCULATE POSTERIOR DISTRIBUTION $p_{nm}$ — S22

CALCULATE VARIATION $\Delta\theta$ OF CYLINDRICAL PARAMETER — S23

UPDATE CYLINDER PARAMETER ($\theta = \theta + \Delta\theta$) — S24

CALCULATE LIKELIHOOD USING EVALUATION FUNCTION — S25

S26
HAS CYLINDER PARAMETER CONVERGED? — NO

YES

S27
IS FITTING SUCCESSFUL? — NO

YES

OUTPUT FITTING RESULT AND LIKELIHOOD — S28

END

**FIG.16**

START

SET i=1 — S101

OBTAIN i-TH SET OF Itr INFORMATION — S102

S103 — i=1 ? — YES

NO

PERFORM FIRST-TYPE SCREENING OPERATION — S104

S105 — IS FIRST REJECTION CONDITION COMPLIED WITH? — YES

NO

COMPARE LIKELIHOOD OF i-TH SET OF Itr INFORMATION WITH LIKELIHOOD OF INTERIM Itr, AND DETERMINE WHETHER OR NOT LIKELIHOOD OF i-TH SET OF Itr INFORMATION IS SUFFICIENTLY GREATER (DECISIVELY MORE PROBABLE) THAN LIKELIHOOD OF INTERIM Itr — S106

S107 — IS LIKELIHOOD OF i-TH SET OF Itr INFORMATION SUFFICIENTLY GREATER THAN LIKELIHOOD OF INTERIM Itr? — YES

NO

PERFORM SECOND-TYPE SCREENING OPERATION — S111

S112 — IS SECOND REJECTION CONDITION COMPLIED WITH? — YES

NO

COMPARE LIKELIHOOD OF i-TH SET OF Itr INFORMATION WITH LIKELIHOOD OF INTERIM Itr, AND DETERMINE WHETHER OR NOT LIKELIHOOD OF i-TH SET OF Itr INFORMATION IS GREATER (MORE PROBABLE) THAN LIKELIHOOD OF INTERIM Itr — S113

REJECT i-TH SET OF Itr INFORMATION — S119

S114 — IS LIKELIHOOD OF i-TH SET OF Itr INFORMATION GREATER THAN LIKELIHOOD OF INTERIM Itr? — NO

YES

UPDATE INTERIM Itr WITH i-TH SET OF Itr INFORMATION — S115

S116 — i=N ? — NO

YES

IDENTIFY INTERIM Itr AS FINAL-VERSION SKELETAL RECOGNITION RESULT — S117

i=i+1 — S120

OUTPUT FINAL-VERSION SKELETAL RECOGNITION RESULT — S118

END

# FIG.17

# FIG.18

200

## INFORMATION PROCESSING DEVICE

### 250
#### CONTROL UNIT

### 240
#### MEMORY UNIT

210
COMMUNI-
CATION
UNIT

220
INPUT UNIT

230
DISPLAY
UNIT

251
OBTAINING UNIT

252
LEARNING-TYPE
SKELETAL FRAME
RECOGNITION
EXECUTING UNIT

253
CONVERTING UNIT

254
EVALUATION
PROCESSING UNIT

255
ELEMENT
RECOGNIZING UNIT

256
SCREEN INFOR-
MATION OUTPUT
CONTROL UNIT

241
MEASUREMENT
TABLE

242
SKELETAL FRAME
RECOGNITION
MODEL

243
CYLINDRICAL
MODEL DATA

244
PRIORITY TABLE

245
ELEMENT
RECOGNITION
TABLE

246
SCENE SWITCHING
DETERMINATION
TABLE

247
SCENE
RESTRICTION
TABLE

248
CONSTRAINT
CONDITION TABLE

# FIG.19

246

| EVENT | SCENE SWITCHING CONDITION |
|---|---|
| POMMEL HORSE | SCENE SWITCHING CONDITION FOR EVENT "POMMEL HORSE" |
| BALANCE BEAM | SCENE SWITCHING CONDITION FOR EVENT "BALANCE BEAM" |
| STILL RINGS | SCENE SWITCHING CONDITION FOR EVENT "STILL RINGS" |
| VAULT | SCENE SWITCHING CONDITION FOR EVENT "HORSE VAULT" |
| HORIZONTAL BAR | SCENE SWITCHING CONDITION FOR EVENT "HORIZONTAL BAR" |
| UNEVEN PARALLEL BARS | SCENE SWITCHING CONDITION FOR EVENT "UNEVEN PARALLEL BARS" |
| PARALLEL BARS | SCENE SWITCHING CONDITION FOR EVENT "PARALLEL BARS" |
| FLOOR EXERCISE | SCENE SWITCHING CONDITION FOR EVENT "FLOOR EXERCISE" |

# FIG.20

| SCENE SWITCHING | SWITCHING CONDITION |
|---|---|
| GENERAL ELEMENT SCENE→AERIAL SCENE | DISTANCE BETWEEN ARMS AND TORSO OR DISTANCE BETWEEN ARMS AND LEGS IS SHORTER THAN THRESHOLD VALUE |
| AERIAL SCENE→ PRE-LANDING SCENE | Close Point OF ARMS IS SMALLER THAN THRESHOLD VALUE |
| PRE-LANDING SCENE→LANDING SCENE | DISTANCE BETWEEN FEET AND FLOOR IS SHORTER THAN THRESHOLD VALUE |

# FIG.21

247

| EVENT | SYMME-TRY | GENERAL ELEMENT | LAST ELEMENT |
|---|---|---|---|
| POMMEL HORSE | ASYM-METRIC | GENERAL ELEMENT SCENE (ASYMMETRIC) | LANDING SCENE |
| BALANCE BEAM | ASYM-METRIC | GENERAL ELEMENT SCENE (ASYMMETRIC), SPECIAL SCENE (BENT-KNEE TURN) | AERIAL SCENE, PRE-LANDING SCENE, LANDING SCENE |
| STILL RINGS | SYM-METRIC | GENERAL ELEMENT SCENE (SYMMETRIC) | AERIAL SCENE, PRE-LANDING SCENE, LANDING SCENE |
| VAULT | ASYM-METRIC | GENERAL ELEMENT SCENE (ASYMMETRIC) | AERIAL SCENE, PRE-LANDING SCENE, LANDING SCENE |
| HORIZON-TAL BAR | SYM-METRIC | GENERAL ELEMENT SCENE (SYMMETRIC), SPECIAL SCENE (RARE ELEMENT) | AERIAL SCENE, PRE-LANDING SCENE, LANDING SCENE |
| UNEVEN PARALLEL BARS | SYM-METRIC | GENERAL ELEMENT SCENE (SYMMETRIC), SPECIAL SCENE (RARE ELEMENT) | AERIAL SCENE, PRE-LANDING SCENE, LANDING SCENE |
| PARALLEL BARS | SYM-METRIC | GENERAL ELEMENT SCENE (SYMMETRIC), SPECIAL SCENE (RARE ELEMENT) | AERIAL SCENE, PRE-LANDING SCENE, LANDING SCENE |
| FLOOR EXERCISE | ASYM-METRIC | GENERAL ELEMENT SCENE (ASYMMETRIC) | AERIAL SCENE, PRE-LANDING SCENE, LANDING SCENE |

# FIG.22

248

| SCENE TYPE | CALCULATION METHOD | RANGE OF JOINT MOTION | DEGREE OF FREEDOM OF JOINT MOVEMENTS | SYMMETRY |
|---|---|---|---|---|
| GENERAL ELEMENT SCENE (ASYMMETRIC) | NORMAL | NORMAL | NORMAL | ABSENT |
| GENERAL ELEMENT SCENE (SYMMETRIC) | NORMAL | NORMAL | NORMAL | PRESENT |
| BENT-KNEE TURN | NORMAL | NORMAL | INCREASING DEGREE OF FREEDOM OF KNEE JOINTS | ABSENT |
| RARE ELEMENT | NORMAL | NORMAL | NORMAL | ABSENT |
| AERIAL ELEMENT | CORRECTION OF LIKELIHOOD OF ARMS AND LEGS | NORMAL | NORMAL | ABSENT |
| PRE-LANDING SCENE | CORRECTION OF LIKELIHOOD OF LEGS | NORMAL | NORMAL | ABSENT |
| LANDING SCENE | NORMAL | SETTING OF ANGLE TO ENSURE THAT POSITIONS OF FEET STAY CLOSE TO VICINITY OF FLOOR | NORMAL | ABSENT |

# FIG.23

254

EVALUATION PROCESSING UNIT

261
FIRST CALCULATING UNIT

262
SECOND CALCULATING UNIT

263
THIRD CALCULATING UNIT

264
EVALUATING UNIT

265
OUTPUT CONTROL UNIT

270
SCENE DETERMINING UNIT

# FIG.24

EVALUATION FUNCTION

7b

7a

0

$\Delta \theta$

# FIG.25

START

OBTAIN RANGE IMAGE DATA FROM SENSORS — S50

INTEGRATE POINT GROUPS CORRESPONDING TO SAME FRAME NUMBER — S51a

USING SKELETAL FRAME RECOGNITION MODEL, CALCULATE JOINT COORDINATE DATA — S51b

REMOVE NOISE FROM POINT GROUP FRAME — S52a

CONVERT JOINT COORDINATE DATA INTO JOINT ANGLE DATA — S52b

FIRST-TYPE FITTING — S53a

SECOND-TYPE FITTING — S53b

THIRD-TYPE FITTING — S53c

BASED ON EVENT AND PRIORITY TABLE, SET FIRST SET OF Itr INFORMATION TO THIRD SET OF Itr INFORMATION — S54

EVALUATION OPERATION — S55

SCENE DETERMINATION OPERATION — S56

HAS ACT ENDED? — S57

NO

YES

PERFORM ELEMENT RECOGNITION, AND IDENTIFY TYPES OF ELEMENTS AND SCORE OF ACT — S58

GENERATE SCREEN INFORMATION — S59

DISPLAY SCREEN INFORMATION — S60

END

# FIG.26

START

↓

S201 GENERAL ELEMENT? — NO →

YES ↓

S202 SPECIAL SCENE? — NO →

YES ↓

S204 DOES SYMMETRY OF EVENT INDICATE ASYMMETRIC NATURE? — NO →

YES ↓

S207 DETERMINE SCENE TYPE (AERIAL SCENE, PRE-LANDING SCENE, LANDING SCENE)

S203 ACCORDING TO SPECIAL SCENE, SELECT METHOD FOR CALCULATION OF VALUE OF EVALUATION FUNCTION AND SELECT CONSTRAINT CONDITION

S205 ACCORDING TO GENERAL ELEMENT SCENE (ASYMMETRIC), SELECT METHOD FOR CALCULATION OF VALUE OF EVALUATION FUNCTION AND SELECT CONSTRAINT CONDITION

S206 ACCORDING TO GENERAL ELEMENT SCENE (SYMMETRIC), SELECT METHOD FOR CALCULATION OF VALUE OF EVALUATION FUNCTION AND SELECT CONSTRAINT CONDITION

S208 ACCORDING TO SCENE TYPE, SELECT METHOD FOR CALCULATION OF VALUE OF EVALUATION FUNCTION AND SELECT CONSTRAINT CONDITION

END

EP 4 040 382 A1

# FIG.27

**COMPUTER** ⌇300

| | | | | |
|---|---|---|---|---|
| ⌇301 | ⌇302 | ⌇303 | ⌇304 | ⌇305 |
| CPU | INPUT DEVICE | DISPLAY | COMMUNICA-TION DEVICE | INTERFACE DEVICE |

⌇306
**RAM**

OBTAINING PROCESS ⌇306a

LEARNING-TYPE SKELETAL FRAME RECOGNITION EXECUTION PROCESS ⌇306b

CONVERSION PROCESS ⌇306c

EVALUATION PROCESSING PROCESS ⌇306d

ELEMENT RECOGNITION PROCESS ⌇306e

SCREEN INFORMATION OUTPUT CONTROL PROCESS ⌇306f

⌇307
**HARD DISK DEVICE**

OBTAINING PROGRAM ⌇307a

LEARNING-TYPE SKELETAL FRAME RECOGNITION EXECUTION PROGRAM ⌇307b

CONVERSION PROGRAM ⌇307c

EVALUATION PROCESSING PROGRAM ⌇307d

ELEMENT RECOGNITION PROGRAM ⌇307e

SCREEN INFORMATION OUTPUT CONTROL PROGRAM ⌇307f

308 BUS

EP 4 040 382 A1

FIG.28

**INTERNATIONAL SEARCH REPORT**

| International application No. |
|---|
| PCT/JP2019/039125 |

A. CLASSIFICATION OF SUBJECT MATTER
Int.Cl. G06T7/00(2017.01)i
According to International Patent Classification (IPC) or to both national classification and IPC

B. FIELDS SEARCHED

Minimum documentation searched (classification system followed by classification symbols)
Int.Cl. G06T7/00

Documentation searched other than minimum documentation to the extent that such documents are included in the fields searched
Published examined utility model applications of Japan     1922–1996
Published unexamined utility model applications of Japan   1971–2019
Registered utility model specifications of Japan           1996–2019
Published registered utility model applications of Japan    1994–2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/207292 A1 (FUJITSU LTD.) 15 November 2018, entire text, all drawings (Family: none) | 1–27 |
| A | JP 2015-167008 A (CANON INC.) 24 September 2015, entire text, all drawings & US 2015/0036879 A1, entire text, all drawings | 1–27 |
| A | US 2016/0335790 A1 (INTEL CORPORATION) 17 November 2016, entire text, all drawings (Family: none) | 1–27 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 November 2019 (14.11.2019) | 10 December 2019 (10.12.2019) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018207292 A

- WO 2019030794 A

**Non-patent literature cited in the description**

- **X. WEI et al.** Accurate Realtime Full-body Motion Capture Using a Single Depth Camera. *ACM Transactions on Graphics,* 2012, vol. 31 (6